(19) Europäisches Patentamt
European Patent Office
Office européen des brevets

(11) **EP 4 502 557 B1**

(12) **EUROPEAN PATENT SPECIFICATION**

(45) Date of publication and mention
of the grant of the patent:
**22.07.2026 Bulletin 2026/30**

(21) Application number: **23827132.4**

(22) Date of filing: **16.06.2023**

(51) International Patent Classification (IPC):
*G01F 23/263* (2022.01)    *G01F 23/24* (2006.01)
*G01F 25/20* (2022.01)

(52) Cooperative Patent Classification (CPC):
**G01F 23/265; G01F 23/266; G01F 23/268;**
G01F 23/241; G01F 23/242; G01F 23/243;
G01F 25/20; G01F 25/24

(86) International application number:
**PCT/JP2023/022432**

(87) International publication number:
**WO 2023/248947 (28.12.2023 Gazette 2023/52)**

(54) **LIQUID LEVEL GAUGE**

FLÜSSIGKEITSSTANDMESSER

JAUGE DE NIVEAU

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **20.06.2022 JP 2022098747**

(43) Date of publication of application:
**05.02.2025 Bulletin 2025/06**

(73) Proprietor: **Japan Aviation Electronics Industry,
Limited
Tokyo 150-0043 (JP)**

(72) Inventors:
- **ICHIKAWA, Shintaro
  Tokyo 150-0043 (JP)**
- **YAMANE, Kohei
  Tokyo 150-0043 (JP)**

(74) Representative: **MERH-IP Matias Erny Reichl
Hoffmann
Patentanwälte PartG mbB
Paul-Heyse-Straße 29
80336 München (DE)**

(56) References cited:
WO-A1-2014/203832    WO-A1-2016/042459
JP-A- 2017 021 001    JP-A- S5 764 115
US-A- 3 552 209       US-A1- 2017 261 361

**Description**

[TECHNICAL FIELD]

The present disclosure relates to a level gauge.

[BACKGROUND ART]

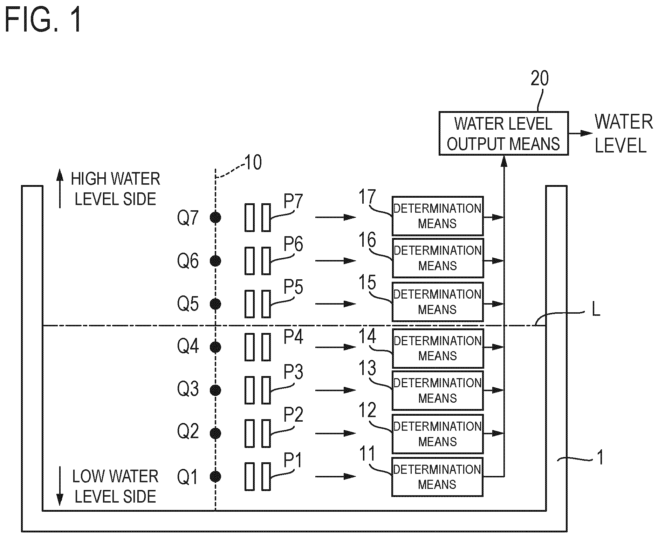

FIG. 1 is a duplication of FIG. 1 of Patent Literature 1 and shows a principle diagram of a water level sensor of prior art. The water level sensor of the prior art measures a water level from a predetermined reference position in a tank 1 (for example, the bottom surface of the tank) to a liquid level L. A reference line 10 is a virtual line, and Z points $Q_z$ (z=1, 2, ..., Z) for observation are set in advance on the reference line 10. In the example illustrated in FIG. 1, Z=7, and seven observation points $Q_1$ to $Q_7$ are shown.

Pairs $P_1$ to $P_7$ of electrodes are arranged one-to-one at respective levels of the observation points $Q_1$ to $Q_7$. Determination means 11 to 17 are connected one-to-one with the respective pairs $P_1$ to $P_7$ of electrodes. Each of the determination means 11 to 17 has a function of determining whether a capacitance value of a corresponding one among the pairs $P_1$ to $P_7$ of electrodes exceeds a predetermined reference value. For example, when the determination means 13 determines that the capacitance value of the pair $P_3$ of electrodes placed at the level of the observation point $Q_3$ exceeds a predetermined reference value, liquid is present at the level of the observation point $Q_3$, and when the determination means 13 determines that the capacitance value of the pair $P_3$ of electrodes placed at the level of observation point $Q_3$ does not exceed the predetermined reference value, no liquid is present at the level of the observation point $Q_3$.

When i determination means from the first to i-th (i∈ {1, 2, ..., Z}) among Z determination means each output a determination result indicating that a reference value is exceeded, a water level output means 20 outputs information indicating the level of the i-th observation point. In the example illustrated in FIG. 1, the determination means 11 to 14, which correspond to the respective pairs $P_1$ to $P_4$ of electrodes and are below the liquid level L (that is, immersed in the liquid), each output a determination result indicating that the reference value is exceeded, and the determination means 15 to 17, which correspond to the respective pairs $P_5$ to $P_7$ of electrodes and are above the liquid level L (that is, not immersed in the liquid), each output a determination result indicating that the reference value is not exceeded. Therefore, the water level output means 20 outputs information indicating the level of the fourth observation point $Q_4$.

Prior art relating to or similar to those described as background art is known from, for example, Patent Literature 2.

Patent Literature 2 discloses a sensor for detecting the level of a medium contained in a container including: an array of capacitive elements designed to be associated to the container, in particular so as to extend according to an axis of detection of the level of the medium, the array of capacitive elements including a plurality of electrodes, in particular on a face of an electrically insulating substrate having a generally elongated shape, the electrodes being spaced apart from one another, in particular along the detection axis, and being preferably substantially coplanar with one another; at least one insulation layer for insulating electrically the electrodes with respect to the inside of the container; and a controller having a plurality of inputs. Each capacitive element includes at least one of a single electrode and a set of electrodes connected together in common, in particular in parallel, the single electrode or the set of electrodes being connected to a respective input of the plurality of inputs. The controller is pre-arranged for discriminating a value of capacitance associated to each electrode in order to deduce the level of the medium present container.

[PRIOR ART LITERATURE]

Patent literature 1: Japanese Patent Application Laid-Open No. H11-311562
Patent Literature 2: WO2016/042459A1

[SUMMARY OF THE INVENTION]

[PROBLEMS TO BE SOLVED BY THE INVENTION]

The water level sensor of the prior art described above locates a water level by determining the presence or absence of liquid at each of levels of two or more observation points, which are set in a direction in which a water level changes (hereinafter, referred to as the level change direction), on the basis of a capacitance value of each of two or more pairs of electrodes which are arranged one-to-one at the levels of the two or more observation points. The water level sensor of the prior art described above locates a water level approximately by discrete values. Thus, according to the water level sensor of the prior art described above, a large number of pairs of electrodes are required to locate a water level with high resolution, and as a result, a large number of conducting lines are also required to correspond to the large number of pairs of electrodes.

For example, when Z observation points are set in the level change direction to locate a water level with high resolution, the water level sensor of the prior art described above requires not only Z pairs of electrodes but also Z+1 conducting lines. This is because electrodes on one side of the Z pairs of electrodes are connected to one common conducting line, and electrodes on the other sides of the Z pairs of electrodes are connected one-to-one to Z conducting lines that differ from each other.

In view of the background art described above, a level gauge having a configuration that allows a total number L of conducting lines drawn from the level gauge to be less than Z+1 (where Z is a total number of observation points) will be disclosed.

[MEANS TO SOLVE THE PROBLEMS]

The herein described technical matters are not intended to expressly or implicitly limit the invention claimed in the claims, nor further to enable persons other than those benefited by the invention (for example, the applicant and the right holder) to limit the invention claimed in the claims, but are provided merely to facilitate an understanding of the present invention.

In view of the above problems, the present invention provides a level gauge as defined by appended claim 1. Preferred embodiments are described in the dependent claims.

[EFFECTS OF THE INVENTION]

According to the present invention, it is possible to reduce a total number L of conducting lines to be drawn from a level gauge to less than Z + 1 (where Z is a total number of observation points).

[BRIEF DESCRIPTION OF THE DRAWINGS]

FIG. 1 is a view illustrating a configuration example of a water level sensor in prior art;
FIG. 2 is a view illustrating a configuration of Example 1 of a water gauge according to the present invention;
FIG. 3 is a flowchart showing flow of water level measurement by the water gauge illustrated in FIG. 2;
FIG. 4 is a table showing operation of a switch in the water level measurement by the water gauge illustrated in FIG. 2;
FIG. 5 is a view illustrating a configuration of Example 2 of the water gauge according to the present invention;
FIG. 6 is a view illustrating a configuration of Example 3 of the water gauge according to the present invention;
FIG. 7 is a view illustrating a configuration of Example 4 of the water gauge according to the present invention;
FIG. 8 is a view illustrating a configuration of Example 5 of the water gauge according to the present invention;
FIG. 9 is a configuration example of an interface sensor which is related to an interface sensor of the present disclosure, but not protected by the claims of the present application;
FIG. 10 is a configuration example of an interface sensor, which is not covered by the claimed invention; and
FIG. 11 is a configuration example of an interface sensor, which is not covered by the claimed invention.

DETAILED DESCRIPTION OF THE EMBODIMENTS

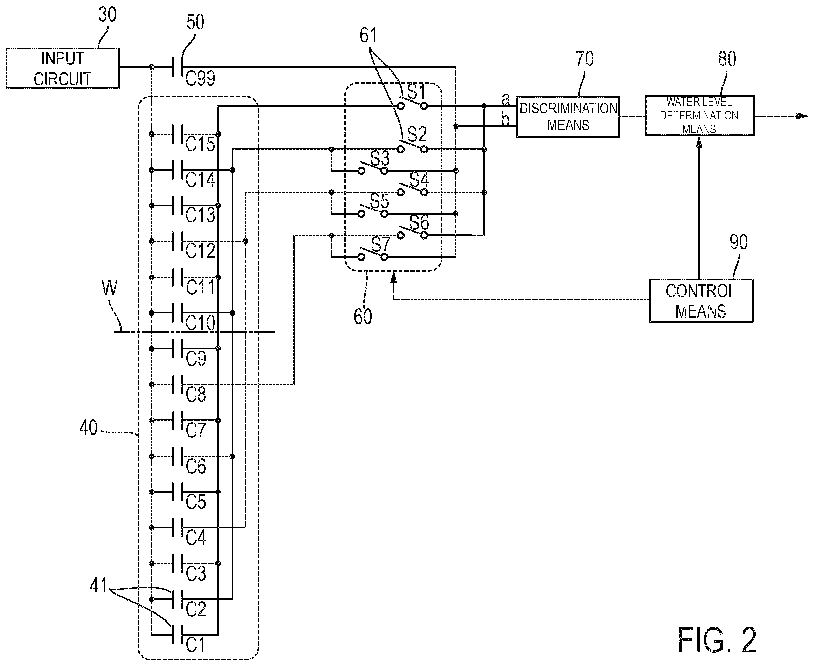

A level gauge of an embodiment of the present invention will be described using examples with reference to the drawings. Hereinafter, in description regarding FIGS. 2 to 8, water is employed as an example of a liquid.

[Example 1]

FIG. 2 illustrates a configuration of Example 1 of a water gauge according to the present invention, and the water gauge includes an input circuit 30, a sensor part 40, an adjustment part 50, switching means 60, discrimination means 70, water level determination means 80, and control means 90.

The sensor part 40 has a plurality of (in this example, 15) electrode pairs 41 arranged in a water level detection direction, and the electrode pairs 41 detect capacitance between electrodes in this example. Although a substrate is not illustrated, these electrode pairs 41 are provided on the substrate in a pattern, and waterproof coating is applied on the pattern. Note that as illustrated in FIG. 2, reference numerals C1 to C15 are assigned to the 15 electrode pairs 41 in order from the electrode pair located at the lowermost position.

The 15 electrode pairs 41 are divided into four groups. Here, in a case where the number of groups is set as n, and n groups are referred to as the first to the n-th group, the electrode pairs 41 constituting the i-th group (i = 1, 2, ..., n) are the electrode pairs 41 located at the $2^{i-1}(2k-1)$-th (where k is a natural number from 1 to $2^{n-i}$) position from the lowermost position in the water level detection direction, and in this example, n = 4, and thus, the electrode pairs 41, denoted by C1 to C15, constituting the respective groups are as follows.

First group: C1, C3, C5, C7, C9, C11, C13, C15
Second group: C2, C6, C10, C14
Third group: C4, C12
Fourth group: C8

One ends of all the electrode pairs 41 are connected to the input circuit 30, and the other ends of the electrode pairs 41 belonging to the same group are connected to each other in parallel and connected to the switching means 60. The input circuit 30 generates and outputs a carrier wave.

The switching means 60 includes seven switches 61 in this example as denoted by reference numerals S1 to S7 and has a configuration in which detection values (capacitance of respective groups) obtained by the respective groups of the sensor part 40 can be input (connected) to one of two inputs a and b of the discrimination means 70 by switching a path by turning ON/OFF of these switches 61.

The adjustment part 50 is a capacitor having capacitance as described later in this example and has one end connected to the input circuit 30 and the other end connected to the input b of the discrimination means 70.

The discrimination means 70 includes, for example, C/V conversion parts respectively for the two inputs a and b and discriminates a larger and smaller relationship between two detection values (capacitance) obtained by the inputs a and b by inputting outputs of the C/V conversion parts to a comparator and performing comparison.

The water level determination means 80 determines a water level based on the discrimination by the discrimination means 70 and outputs the water level to outside. Note that ON/OFF of the seven switches 61 of the switching means 60 is controlled by a control signal from the control means 90, and a signal in synchronization with this control is also input to the water level determination means 80 from the control means 90.

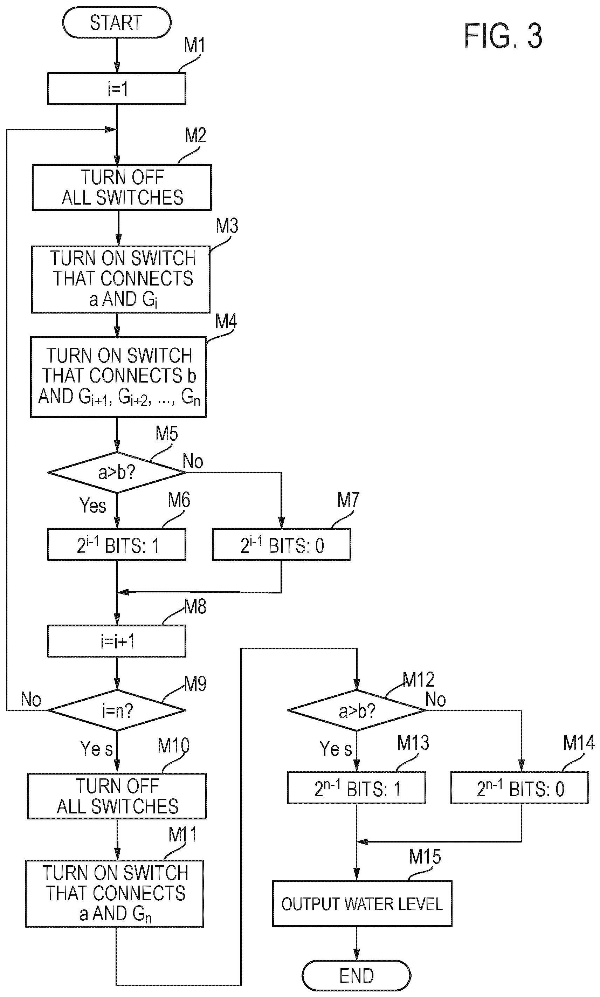

Next, a flow until the water gauge having such a configuration outputs a water level will be described with reference to a flowchart shown in FIG. 3. Note that in FIG. 3, the number of groups is set as n, $G_i$ indicates the i-th group, and $G_{i+1}$, $G_{i+2}$, and $G_n$ respectively indicate the (i+1)-th group, the (i+2)-th group, and the n-th group.

First, i = 1 is set (step M1), and all the switches 61 of the switching means 60 are turned OFF (step M2). Then, the switch 61 that connects the input a of the discrimination means 70 and $G_i$ is turned ON, and further, the switches 61 that connect the input b of the discrimination means 70 and $G_{i+1}$, $G_{i+2}$, ..., $G_n$ are turned ON (step M3, M4). The discrimination means 70 discriminates a larger and smaller relationship between the inputs a and b (step M5), and if a > b, outputs 1 to the water level determination means 80, and if a < b, outputs 0 to the water level determination means 80. The water level determination means 80 stores this as a value of $2^{i-1}$ bits (step M6, M7).

Then, i = i + 1 is set (step M8), whether i = n or not is determined (step M9), and if i = n is false, the processing returns to step M2, and the steps M2 to M9 are repeated until i = n.

If i = n, after all the switches 61 of the switching means 60 are turned OFF (step M10), the switch 61 that connects the input a of the discrimination means 70 and $G_n$ is turned ON (step M11). The discrimination means 70 discriminates a larger and smaller relationship between the inputs a and b (step M12), if a > b, outputs 1 to the water level determination means 80, and if a < b, outputs 0 to the water level determination means 80. The water level determination means 80 stores this as a value of $2^{n-1}$ bits (step M13, M14), and the water level determination means 80 converts the value of $2^0$ bits to $2^{n-1}$ bits obtained in this manner, that is, binary to the water level with reference to a memory and outputs the water level (step M15).

In this manner, in this example, the discrimination means 70 discriminates a larger and smaller relationship between a detection value obtained by the i-th group and a detection value obtained by a group that is a combination from the (i+1)-th group to the n-th group for each of i = 1, 2, ..., n-1 and further discriminates a larger and smaller relationship between a detection value obtained by the n-th group and a detection value obtained by the adjustment part 50, thereby measures the water level. The switching means 60 sequentially switches connection between the groups of the sensor part 40 and the discrimination means 70 so as to enable such discrimination by the discrimination means 70.

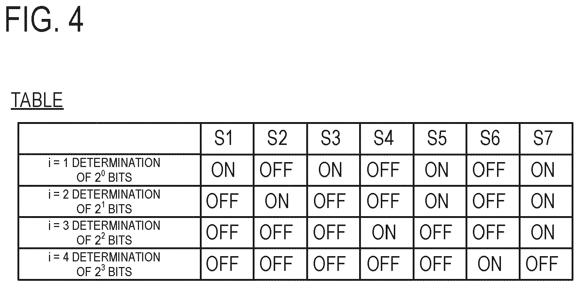

The table shown in FIG. 4 indicates ON/OFF of seven switches 61, that is, S1 to S7 of the switching means 60 if i = 1 to 4 in the water gauge illustrated in FIG. 2, that is, the water gauge in which the number n of the groups of the sensor part 40 is four, and i becomes 1 to 4 in the flowchart shown in FIG. 3. In the water gauge illustrated in FIG. 2, in a case where the first group to the fourth group are indicated as $G_1$ to $G_4$, connections between the groups and the two inputs a and b of the discrimination means 70 becomes as follows if i = 1 to 4.

|  | Input a | Input b |
|---|---|---|
| i = 1: determination of $2^0$ bits | $G_1$ | $G_2 + G_3 + G_4$ |
| i = 2: determination of $2^1$ bits | $G_2$ | $G_3 + G_4$ |
| i = 3: determination of $2^2$ bits | $G_3$ | $G_4$ |
| i = 4: determination of $2^3$ bits | $G_4$ | N/A (= not applicable) |

Capacitance connected to the inputs a and b of the discrimination means 70 will be specifically described below using an example where a water level W is located at a position indicated by a dash-double-dot line in FIG. 2 and the electrode pairs from the lowermost electrode pair to the ninth electrode pair C9 are soaked in water.

Capacitance when the electrode pair 41 is located in the air is denoted by $C_{air}$, and capacitance when the electrode pair 41 is located in the water is denoted by $C_{water}$. The capacitor of the adjustment part 50 is denoted by C99 in the following description, and capacitance is set as $0.5\ C_{water}$. Relative permittivity of water is 80 at 20°C, and $C_{water} = 80\ C_{air}$. In a case where i = 1 to 4, the capacitance connected to the inputs a and b becomes as follows.

$$<i = 1:\ \text{determination of } 2^0 \text{ bits}>$$

$$\text{- Input a: } G_1 = C1 + C3 + C5 + C7 + C9 + C11 + C13 + C15$$

$$= 5\ C_{water} + 3\ C_{air} = 403\ C_{air}$$

$$\text{- Input b: } G_2 + G_3 + G_4 = C2 + C4 + C6 + C8 + C10 + C12 + C14 + C99$$

$$= 4.5\ C_{water} + 3\ C_{air} = 363\ C_{air}$$

$$\langle i = 2: \text{determination of } 2^1 \text{ bits}\rangle$$

$$\text{- Input a: } G_2 = C2 + C6 + C10 + C14$$

$$= 2\, C_{\text{water}} + 2\, C_{\text{air}} = 162\, C_{\text{air}}$$

$$\text{- Input b: } G_3 + G_4 = C4 + C8 + C12 + C99$$

$$= 2.5\, C_{\text{water}} + C_{\text{air}} = 201\, C_{\text{air}}$$

$$\langle i = 3: \text{determination of } 2^2 \text{ bits}\rangle$$

$$\text{- Input a: } G_3 = C4 + C12$$

$$= C_{\text{water}} + C_{\text{air}} = 81\, C_{\text{air}}$$

$$\text{- Input b: } G_4 = C8 + C99$$

$$= 1.5\, C_{\text{water}} = 120\, C_{\text{air}}$$

$$\langle i = 4: \text{determination of } 2^3 \text{ bits}\rangle$$

$$\text{- Input a: } G_4 = C8$$

$$= C_{\text{water}} = 80\, C_{\text{air}}$$

$$\text{- Input b: } N/A = C99$$

$$= 0.5\, C_{\text{water}} = 40\,_{\text{air}}$$

From the above, if i = 1, a > b and $2^0$ bits become 1, and if i = 2, a < b and $2^1$ bits become 0. Further, if i = 3, a < b and $2^2$ bits become 0, and if i = 4, a > b and $2^3$ bits become 1. Thus, a result of adding these becomes 1001 in binary and becomes 9 in decimal.

In this manner, in the water gauge illustrated in FIG. 2, the water level is processed as binary, and in a case of a low water level at which all the electrode pairs 41 are not soaked in water, the result becomes 0000 in binary, and in a case of a high water level at which all the electrode pairs 41 are soaked in water, the result becomes 1111 in binary (15 in decimal).

The adjustment part 50 is a capacitor having capacitance of 0.5 $C_{\text{water}}$ in this example. The adjustment part 50 is constantly connected to the input b of the discrimination means 70 and functions to compare with $G_4$ upon determination of $2^3$ bits if i = 4. The adjustment part 50 functions so that two detection values (capacitance) for which a larger and smaller relationship is to be discriminated by the discrimination means 70 always become values different from each other. In other words, the adjustment part 50 functions to avoid erroneous detection as a result of the larger and smaller relationship being inverted due to an error cause, or the like.

Examples 2 to 5 will be described below. Examples 2 to 5 are examples in which components of Example 1 are partially changed, and portions corresponding to the components of Example 1 illustrated in FIG. 2 will be denoted by the same reference numerals, and detailed description thereof will be omitted.

[Example 2]

As described above, the adjustment part 50 functions so that the detection value appropriately changes according to the water level and so that erroneous detection does not occur. However, for example, in a case where an error of capacitance of the electrode pairs 41 is larger or not uniform, a situation can occur in which the detection value does not appropriately change according to the water level only with capacitance of one adjustment part 50.

For example, in the water gauge illustrated in FIG. 2, suppose only the electrode pair 41 denoted by C4 has an error of +0.5 $C_{water}$. In other words, in a case of the water level W, C4' = 1.5 $C_{water}$. In this event, if i = 1 to 4, the capacitance connected to the inputs a and b of the discrimination means 70 becomes as follows.

$$\text{<i = 1: determination of } 2^0 \text{ bits>}$$

$$\text{- Input a: } G_1 = C1 + C3 + C5 + C7 + C9 + C11 + C13 + C15$$

$$= 5\ C_{water} + 3\ C_{air} = 403\ C_{air}$$

$$\text{- Input b: } G_2 + G_3 + G_4 = C2 + C4' + C6 + C8 + C10 + C12 + C14 + C99$$

$$= 4.5\ C_{water} + 3\ C_{air} + C99 = 363\ C_{air} + C99$$

$$\text{<i = 2: determination of } 2^1 \text{ bits >}$$

$$\text{- Input a: } G_2 = C2 + C6 + C10 + C14$$

$$= 2\ C_{water} + 2\ C_{air} = 162\ C_{air}$$

$$\text{- Input b: } G_3 + G_4 = C4' + C8 + C12 + C99$$

$$= 2.5\ C_{water} + C_{air} + C99 = 201\ C_{air} + C99$$

$$\text{<i = 3: determination of } 2^2 \text{ bits>}$$

$$\text{- Input a: } G_3 = C4' + C12$$

$$= 1.5\ C_{water} + C_{air} = 121\ C_{air}$$

$$\text{- Input b: } G_4 = C8 + C99$$

$$= C_{water} + C99 = 80\ C_{air} + C99$$

$$\text{<i = 4: determination of } 2^3 \text{ bits>}$$

$$\text{- Input a: } G_4 = C8$$

$$= C_{water} = 80\ C_{air}$$

$$\text{- Input b: N/A} = C99$$

A true value of binary is 1001, and thus, a relationship between a and b must be such that if i = 1, a > b, if i = 2, a < b, and if i = 3, a < b, and if i = 4, a > b. Thus, a relationship must be such that if i = 1, 403 $C_{air}$ > 363 $C_{air}$ + C99, and thus, C99 < 40 $C_{air}$, and if i = 3, 121 $C_{air}$ < 80 $C_{air}$ + C99, and thus, C99 > 41 $C_{air}$. Accordingly, C99 that satisfies the both does not exist, and thus, one C99 that satisfies all determination of $2^i$ bits, that is, the adjustment part 50 does not exist.

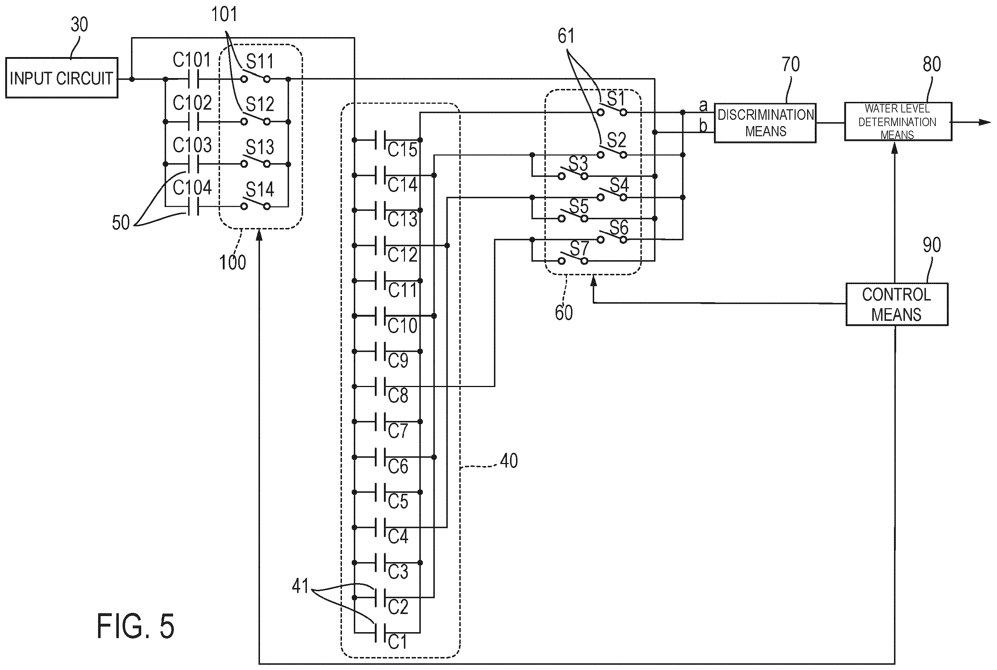

To address such a problem, in Example 2, as illustrated in FIG. 5, a plurality of (in this example, four, denoted by reference numerals C101 to C104) adjustment parts 50 are provided, and further, switching means 100 that switches connection of the adjustment parts 50 to the input b of the discrimination means 70 is provided. The switching means 100 includes four switches 101 denoted by reference numerals S11 to S14 which turn ON/OFF the connection of the respective adjustment parts 50, that is, C101 to C104 to the input b.

In this example, by providing a plurality of adjustment parts 50 in this manner and performing switching at the switching means 100, capacitance necessary for adjustment can be selected according to groups (combination of groups) connected to the discrimination means 70. Note that capacitance values of the four adjustment parts 50, that is, C101 to C104 are determined by a preliminary test and selected in accordance with respective processes of i = 1 to 4 in the flowchart shown in FIG. 3. ON/OFF of the four switches 101 of the switching means 100 is controlled by a control signal from the control means 90, which is in synchronization with a control signal that controls the switching means 60.

[Example 3]

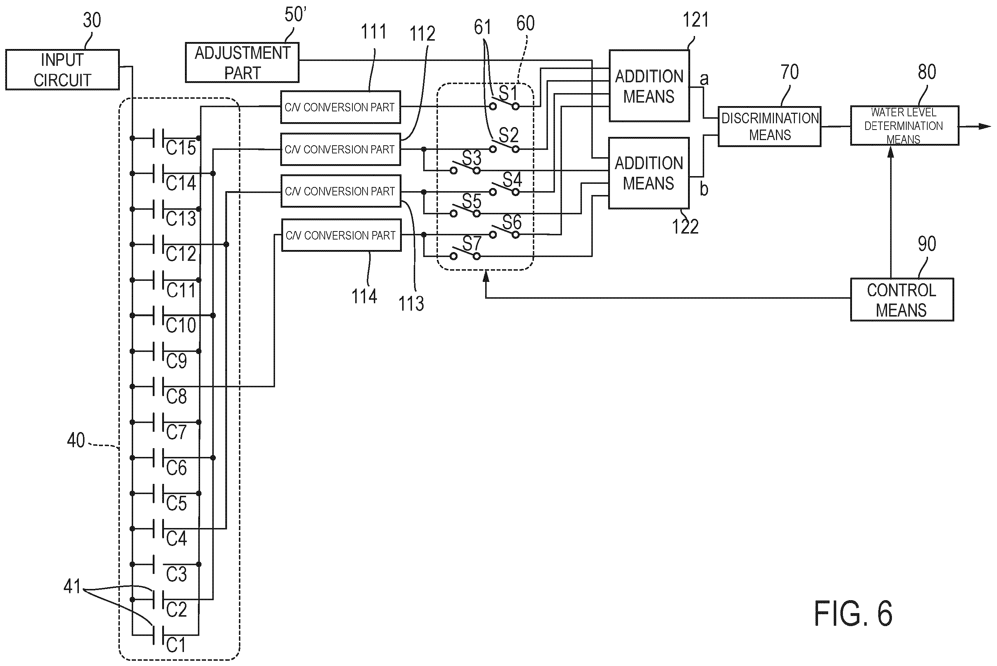

The switch 61 of the switching means 60 has gate capacitance, and thus, an error by the gate capacitance may affect the detection value. In Example 3, to address this problem, as illustrated in FIG. 6, C/V conversion parts 111 to 114 are provided between the respective groups (the first group to the fourth group: $G_1$ to $G_4$) of the sensor part 40 and the switching means 60 and convert capacitance values into voltage values in advance before being input to the switching means 60 so as to eliminate influence of the gate capacitance.

In this example, the adjustment part 50' outputs a predetermined voltage determined by a preliminary test using a DC/DC converter, or the like.

Two addition means 121 and 122 are provided between the switching means 60 and the discrimination means 70, and the switches S1, S2, S4 and S6 are connected to an input of the addition means 121, and the switches S3, S5, S7 and the adjustment part 50' are connected to an input of the addition means 122. The addition means 121 and 122 are, for example, addition circuits constituted with operation amplifiers.

An output of the addition means 121 is input to the input a of the discrimination means 70, and an output of the addition means 122 is input to the input b of the discrimination means 70. According to such a configuration, also in this example, discrimination processing is performed in accordance with switching operation indicated in the table in FIG. 4 and the flowchart shown in FIG. 3 in a similar manner to Example 1.

[Example 4]

Example 4 is a modification of a configuration of Example 3 in which the C/V conversion parts 111 to 114 are provided between the respective groups of the sensor part 40 and the switching means 60.

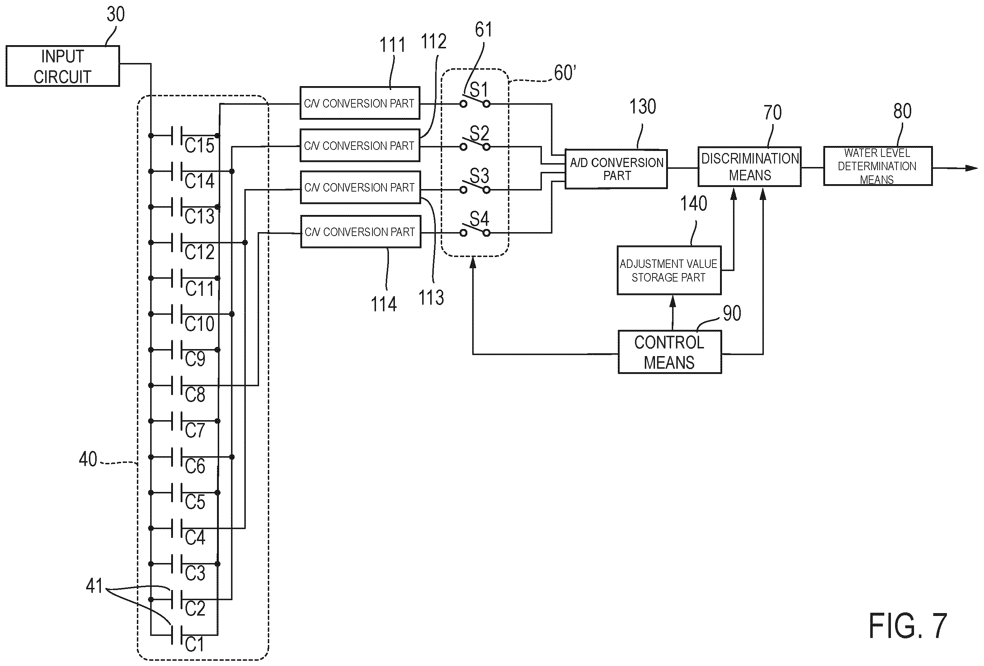

In this example, as illustrated in FIG. 7, the switching means 60' has four switches 61 denoted by S1 to S4 corresponding to the four C/V conversion parts 111 to 114, and an A/D conversion part 130 that converts a detection value into a digital value is provided between the switching means 60' and the discrimination means 70, and further, an adjustment value storage part 140 that stores an adjustment value (capacitance adjustment voltage value) obtained in advance as a digital value is provided.

An IC and a plurality of resistors are required for an analog circuit to output a voltage and, for example, as in a configuration having four adjustment parts 50 illustrated in Example 2, there is a disadvantage that as the number of the adjustment values increases, a circuit scale increases. Concerning this point, in this example, the adjustment values are stored as digital values, and thus, the circuit scale does not increase.

In this example, the four switches 61 of the switching means 60' are sequentially turned ON to obtain voltage outputs of the respective groups (the first group to the fourth group: $G_1$ to $G_4$) as digital values. The discrimination means 70 stores the digital values input from the A/D conversion part 130 in association with $G_i$ (i = 1 to 4) in this example, and after digital values are obtained (stored) for all $G_i$ (i = 1 to 4), performs determination for i = 1 to 4, that is, determination of $2^0$ bits to $2^3$ bits by performing calculation using the digital values and the adjustment values (in this example, four adjustment values corresponding to i = 1 to 4) stored in the adjustment value storage part 140.

[Example 5]

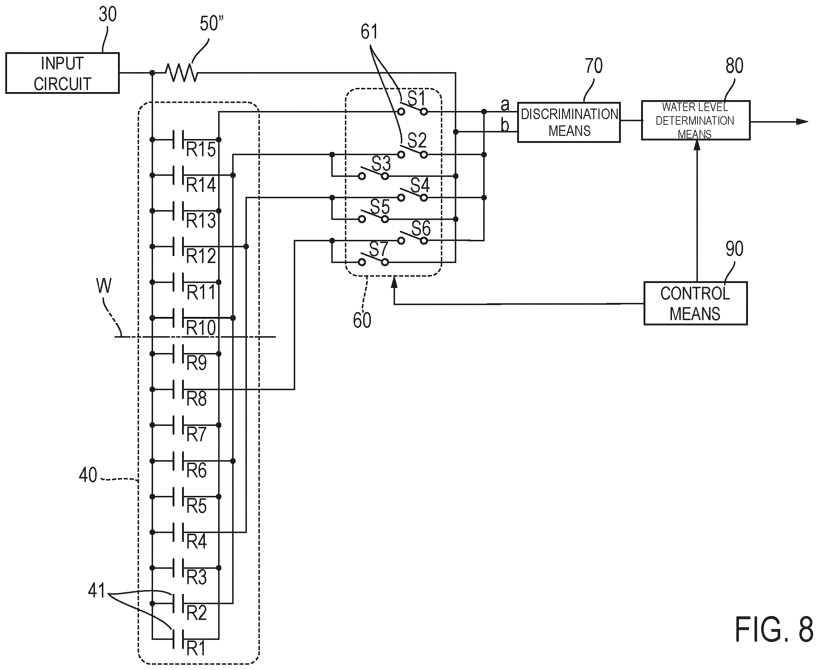

While in Examples 1 to 4 described above the electrode pair 41 detects capacitance between the electrodes, the electrode pair 41 may detect a resistance value between the electrodes. FIG. 8 illustrates such a water gauge as a modification of the water gauge in Example 1 illustrated in FIG. 2. The adjustment part 50" is a resistor in this example. In this example, reference numerals R1 to R15 are sequentially assigned to 15 electrode pairs 41 from the electrode pair located at the lowermost position.

A resistance value to be connected to the inputs a and b of the discrimination means 70 will be specifically described below using an example of a case where the water level W is located at the same position as in FIG. 2. Note that the input circuit 30 generates and outputs an input voltage in this example. The discrimination means 70 discriminates the resistance value of which of the inputs a and b is greater using a bridge circuit, or the like. In this example, the discrimination means 70 outputs 0 if a > b and outputs 1 if a < b in contrast to the case where capacitance is detected.

The resistance value when the electrode pair 41 is located in the air is denoted by $R_{air}$, and the resistance value when the electrode pair 41 is located in the water is denoted by $R_{water}$. A resistor of the adjustment part 50" is denoted by R99 in the following description, and a resistance value is set as $2 R_{water}$. $R_{air}$ can be such that $R_{air} \approx \infty$. If i = 1 to 4, the resistance values Ra and Rb to be connected to the inputs a and b become as follows.

\<i = 1: determination of $2^0$ bits>

- Input a: $G_1$ = R1 + R3 + R5 + R7 + R9 + R11 + R13 + R15
$1/Ra = (5/R_{water}) + (3/R_{air})$       $\therefore Ra = R_{water}/5$
- Input b: $G_2 + G_3 + G_4$ = R2 + R4 + R6 + R8 + R10 + R12 + R14 + R99
$1/Rb = (4.5/R_{water}) + (3/R_{air})$       $\therefore Rb = R_{water}/4.5$

\<i = 2: determination of $2^1$ bits>

- Input a: $G_2$ = R2 + R6 + R10 + R14
$1/Ra = (2/R_{water}) + (2/R_{air})$       $\therefore Ra = R_{water}/2$
- Input b: $G_3 + G_4$ = R4 + R8 + R12 + R99
$1/Rb = (2.5/R_{water}) + (1/R_{air})$       $\therefore Rb = R_{water}/2.5$

\<i = 3: determination of $2^2$ bits>

- Input a: $G_3$ = R4 + R12
$1/Ra = (1/R_{water}) + (1/R_{air})$       $\therefore Ra = R_{water}$
- Input b: $G_4$ = R8 + R99
$1/Rb = 1.5/R_{water}$       $\therefore Rb = R_{water}/ 1.5$

\<i = 4: determination of $2^3$ bits>

- Input a: $G_4$ = R8
$1/Ra = 1/R_{water}$       $\therefore Ra = R_{water}$
- Input b: N/A = R99
$1/Rb = 0.5/R_{water}$       $\therefore Rb = 2R_{water}$

From the above, if i = 1, a < b, and thus, $2^0$ bits become 1, and if i = 2, a > b, and thus, $2^1$ bits become 0. Further, if i = 3, a > b, and thus, $2^2$ bits become 0, and if i = 4, a < b, and thus, $2^3$ bits become 1. Thus, a result of adding these become 1001 in binary in Example 5 as well as in Example 1.

Various examples of the water gauge according to the present invention have been described above. The water gauge according to the present invention can obtain resolution corresponding to the number of electrode pairs by dividing a plurality of electrode pairs arranged in the water level detection direction into n groups, constituting the i-th group (i = 1, 2, ..., n) with electrode pairs located at the $2^{i-1}(2k-1)$-th (where k is a natural number from 1 to $2^{n-i}$) position from the lowermost position in the water level detection direction and repeatedly comparing a larger and smaller relationship between the detection values while changing a combination of the groups.

Thus, the number of wires (wires on the detection side) to be connected to the discrimination means from the respective electrode pairs of the sensor part corresponds to the number of groups, and only one discrimination means is required.

Further, for example, suppose if the water level is detected at 1000 stages (resolution of 1/1000 with respect to a measurement range), in a case of a configuration as in the related art illustrated in FIG. 1, the number of discrimination means and the number of electrode pairs respectively become 1000, and the number of wires on the detection side from the electrode pairs to the discrimination means becomes 1000.

In contrast, in the water gauge according to the present invention, the group configuration as described above enables measurements of $2^n-1$ electrode pairs by n groups, that is, enables to achieve resolution of $1/(2^n-1)$ by n groups, and thus, in order to achieve resolution of 1/1000, only 10 groups are required, and, only 10 wires are required on the detection side.

The water gauge described above can be, for example, used to measure a water level of a river, and the like, and, for example, can be applied to a liquid level gauge, or the like, that detects a liquid level of a liquid within a tank.

The reference examples described below do not pertain to or are not covered by the claimed invention, but are helpful for a better understanding of the embodiment(s) covered by the claimed invention.

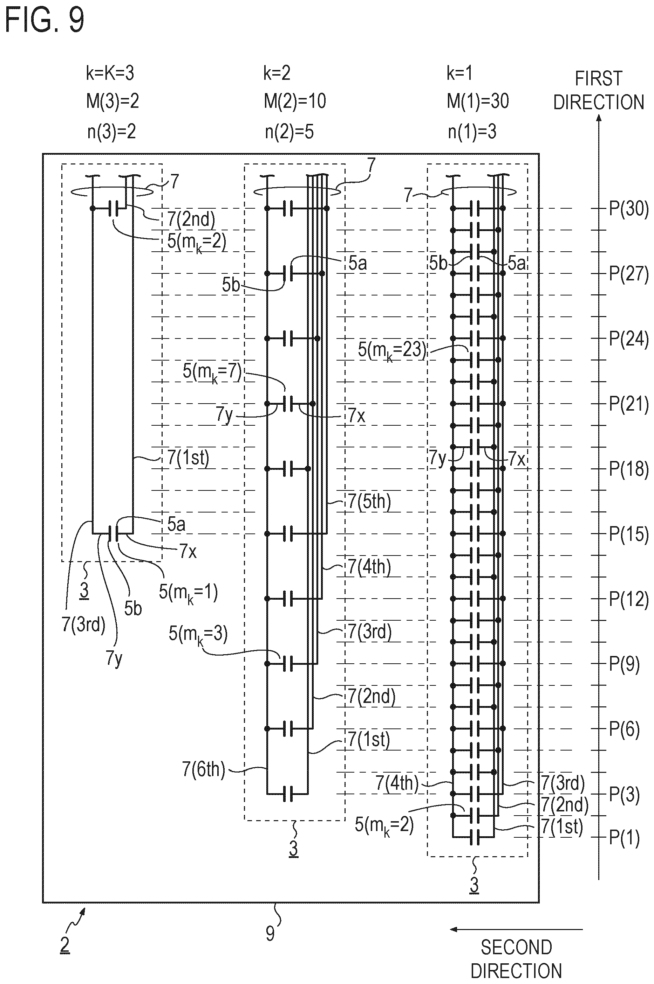

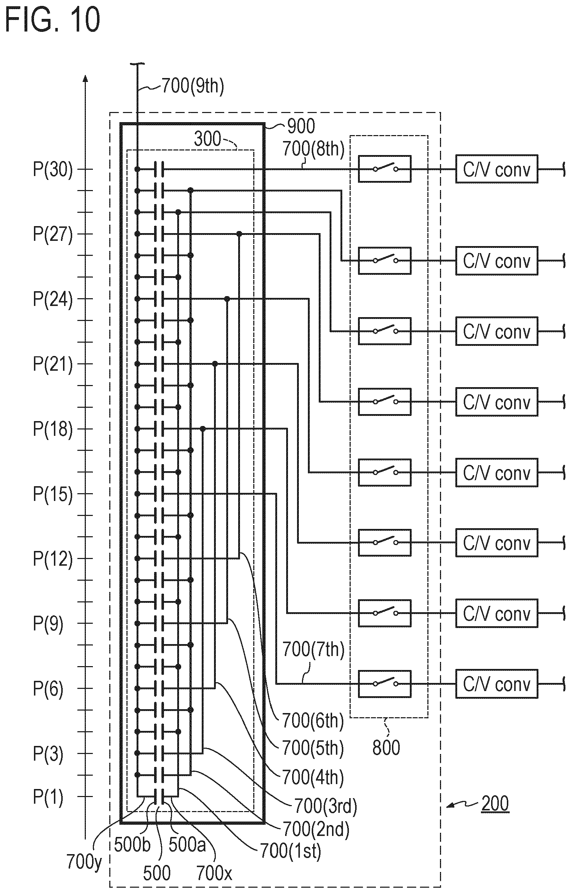

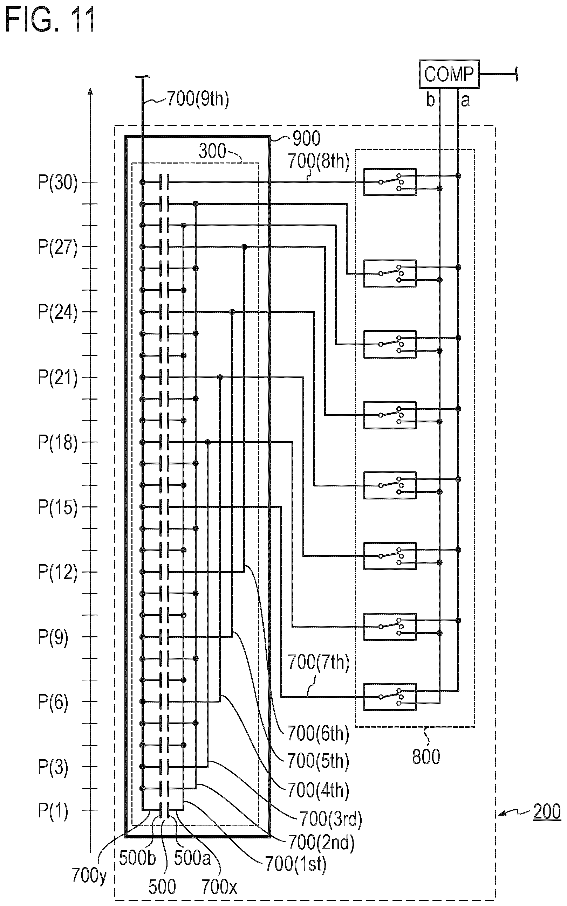

The interface sensor 200 herein disclosed and the level gauge including the interface sensor 200 will be described below in other points of view with reference to FIGS. 10 and 11 illustrating a non-limited example. Prior to the description thereof, in order to facilitate understanding of the interface sensor 200 herein disclosed, an interface sensor 2 related to the interface sensor 200 herein disclosed will be described with reference to FIG. 9. Note that while the interface sensor 2 is not protected by the claims of the present application, description of the interface sensor 2 is useful for understanding of the interface sensor 200, and thus, the description of the interface sensor 2 will be incorporated into the description of the interface sensor 200 as necessary. Note that the incorporation of the description will not be always explicitly performed.

The interface sensor 2 is a sensor for locating a position of an interface between two types of substances (that is, a first substance and a second substance different from each other). However, the number of interfaces has to be 1 or 0 in a range from a plane P(1) to a plane P(M(1)) as described later to accurately locate the position. As will be shown in Formula (4) later, the interface sensor 2 includes E pairs 5 of electrodes. The position of the interface between the first substance and the second substance is located by using physical quantities produced in each of the E pairs 5 of electrodes, corresponding to a property of the first substance or second substance present between electrodes of each of the E pairs 5 of electrodes. The "interface" is a contact boundary between the first substance as a homogeneous phase and the second substance as a homogeneous phase. The "homogeneous phase" is an entity of a material system which is uniform in chemical composition and physical state. In other words, when physical properties and chemical properties of any portion V of an entity of one material system are respectively the same as physical properties and chemical properties of any portion W different from the portion V of the entity of the material system, the entity of the material system is a "homogeneous phase." A typical example of the interface sensor 2 is a sensor for locating a position of an interface between a liquid (for example, water) as the first substance and a gas (for example, air) as the second substance.

A configuration of the interface sensor 2 will be described. Symbols appearing in the following description are unrelated to symbols used in the description of the embodiments described above. Further, $RC = \varepsilon\rho$ holds, where C is capacitance between two conductors with equal positive and negative charges, R is electrical resistance between the two conductors, $\varepsilon$ is dielectric constant of a medium between the two conductors, and $\rho$ is electrical resistivity of the medium between the two conductors. Therefore, only the case of the capacitance of the pair 5 of electrodes will be described, and the description of the case of the electrical resistance of the pair 5 of electrodes will be omitted.

The interface sensor 2 includes K sensor blocks 3. Here, K is a predetermined integer satisfying $2 \leq K$.

The K sensor blocks 3 are formed on F substrates 9 each having a flat plate shape, although not limited thereto. F is a predetermined integer satisfying $1 \leq F \leq K$. In a case where F < K, there is a substrate 9 having two or more sensor blocks 3. In the example shown in FIG. 9, F = 1. In a case where $F \geq 2$, the F substrates 9 may be disposed on one plane, or may be arranged like an angle steel or a channel steel, or may be arranged like a triangular pipe or a quadrangular pipe, although not limited thereto.

The k-th sensor block 3 among the K sensor blocks 3 includes M(k) pairs 5 of electrodes and n(k)+ 1 conducting lines 7. The M(k) pairs 5 of electrodes included in the k-th sensor block 3 have the same capacitance $C_k$ to each other in a state where interelectrode gap of each of the M(k) pairs 5 of electrodes is filled with, for example, the first substance. The capacitance $C_k$ of each of the M(k) pairs 5 of electrodes included in the k-th sensor block 3 may be the same as or different from capacitance $C_j$ of each of M(j) pairs 5 of electrodes included in the j-th ($j \neq k$) sensor block 3. The n(k)+1 conducting lines 7 are drawn from the sensor block 3 and are connected to the M(k) pairs 5 of electrodes as described later. The n(k)+1 conducting lines 7 are connected to a detection circuit as described later. In FIG. 9, only some pairs of electrodes and some conducting lines are provided with reference signs for ease of viewing the drawing. k is a parameter for representing an integer that satisfies $1 \leq k \leq K$, that is, $k \in \{x \in N: 1 \leq x \leq K\}$. N is a set of all positive integers. For any $k \in \{x \in N: 1 \leq x \leq K\}$, n(k) is a predetermined integer which satisfies $2 \leq n(k)$. For any $k \in \{x \in N: 1 \leq x \leq K\}$, M(k) is expressed as Formula (1). "$\times$" represents multiplication. M(1), that is, the number of the pairs 5 of electrodes included in the first sensor block 3 determines resolution of the interface sensor 2. In other words, M(1) matches a total number of "observation points" described above (this total number is represented by a symbol Z in the description of the prior art). Although details will become clear from Formula (4) and Formula (5) as described later, $M(1) \geq 8$ needs to be satisfied so that the total number L of the conducting lines 7 to be drawn from the interface sensor 2 can be smaller than a sum of 1 and the total number M(1) of the observation points. Further, in a case where M(1) = 8, K = 2 needs to be satisfied so that the total number L of the conducting lines 7 to be drawn from the interface sensor 2 can be smaller than a sum of 1 and the total number M(1) of the observation points.

[Formula 8]

$$M(k) = \prod_{j=k}^{K} n(j) = n(K) \times \cdots \times n(k) \tag{1}$$

In designing of the interface sensor 2, a value of M(1), which is related to the resolution of the interface sensor 2, is customarily determined first. In terms of this, n(k) is a positive divisor (except 1 and M(1)) of M(1). Thus, for any $k \in \{x \in N: 1 \leq x \leq K\}$, n(k) < M(1). Further, note that notation of M(1) is not unique. For example, in a case where M(1) = 60, M(1) has two or more types of notation (that is, two or more ways of factorization) such as

$$M(1) = 2 \times 30$$

(that is, K = 2, n(1) = 30, n(2) = 2),

$$M(1) = 3 \times 20$$

(that is, K = 2, n(1) = 20, n(2) = 3),

$$M(1) = 12 \times 5$$

(that is, K = 2, n(1) = 5, n(2) = 12),

$$M(1) = 4 \times 3 \times 5$$

(that is, K = 3, n(1) = 5, n(2) = 3, n(3) = 4),

$$M(1) = 5 \times 6 \times 2$$

(that is, K = 3, n(1) = 2, n(2) = 6, n(3) = 5), and

$$M(1) = 2 \times 3 \times 2 \times 5$$

(that is, K = 4, n(1) = 5, n(2) = 2, n(3) = 3, n(4) = 2).
In a case of M(1) having two or more types of notation, a person who implements the interface sensor 2 can freely select one type of notation in view of easiness of implementation of the interface sensor 2, manufacturing cost of the interface sensor 2, an environment in which the interface sensor 2 is used, and the like. In other words, two or more types of notation of M(1) mean a degree of freedom in designing of the interface sensor 2.
The $m_k$-th pair 5 of electrodes among M(k) pairs 5 of electrodes included in the k-th ($k \in \{x \in N: 1 \leq x \leq K\}$) sensor block 3 is placed in r(k, $m_k$)-th plane P(r(k, $m_k$)) among M(1) planes. $m_k$ is a parameter for representing an integer that satisfies $1 \leq m_k \leq M(k)$, that is, $m_k \in \{x \in N: 1 \leq x \leq M(k)\}$. For any $k \in \{x \in N: 1 \leq x \leq K\}$ and for any $m_k \in \{x \in N: 1 \leq x \leq M(k)\}$, r(k, $m_k$) is expressed by Formula (2). M(1) planes P(1), ..., P(M(1)) do not coincide with each other and are parallel to each other. The M(1) planes P(1), ..., P(M(1)) are arranged in space in order according to an order relation of elements (that is, the order relation of natural numbers) of the set $\{x \in N: 1 \leq x \leq M(1)\}$. Specifically, the q-th ($q \in \{x \in N: 2 \leq x \leq p-1\}$) plane P(q) exists between the first plane P(1) and the p-th ($p \in \{x \in N: 3 \leq x \leq M(1)\}$) plane P(p). Further, in a simple term, in a case where a normal direction of M(1) planes P(1), ..., P(M(1)) parallel to each other is referred to as a first direction, M(1) planes P(1), ..., P(M(1)) are arranged in this order in the first direction. For any $g \in \{x \in N: 1 \leq x \leq M(1)-2\}$, and $h \in \{x \in N: g + 1 \leq x \leq M(1)-1\}$, a distance between the g-th plane P(g) and the (g+1)-th plane P(g+1) may be equal to or not equal to a distance between the h-th plane P(h) and the (h+1)-th plane P(h+1). For example, it is preferable to make narrower an interval between adjacent planes in a measurement range in which a position of the interface is desired to be more accurately located. In the k-th ($k \in \{x \in N: 1 \leq x \leq K\}$) sensor block 3, M(k) pairs 5 of electrodes are customarily arranged linearly, but for example, the M(k) pairs 5 of electrodes may be arranged in a walking footprint shape, although not limited thereto.
[Formula 9]

$$r(k, m_k) = m_k \times \prod_{j=1}^{k} n(j-1) \tag{2}$$

In terms of easiness of the designing and easiness of manufacturing of the interface sensor 2, K sensor blocks 3 are customarily arranged in a second direction orthogonal to the first direction. A total number of possible arrangement patterns of the K sensor blocks 3 in the second direction is K!, that is, $\Pi_{k-1}{}^K k$. Note that in a case where the first direction is a vertical direction, "plane" may be rephrased as, for example, "level."

The $m_k$-th ($m_k \in \{x \in N: 1 \le x \le M(k)\}$) pair 5 of electrodes among M(k) pairs 5 of electrodes included in the k-th ($k \in \{x \in N: 1 \le x \le K\}$) sensor block 3 has one electrode 5a, which is connected to the $s(m_k)$-th conducting line 7 among n(k)+1 conducting lines 7, and the other electrode 5b, which is connected to the {n(k)+1}-th conducting line 7 among the n(k)+ 1 conducting lines 7. One electrode 5a of the $m_k$-th ($m_k \in \{x \in N: 1 \le x \le M(k)\}$) pair 5 of electrodes and the $s(m_k)$-th conducting line 7 are connected to each other by way of a support line 7x in this example. The other electrode 5b of the $m_k$-th ($m_k \in \{x \in N: 1 \le x \le M(k)\}$) pair 5 of electrodes and the {n(k)+1}-th conducting line 7 are connected to each other by way of a support line 7y in this example. $s(m_k)$ is an integer that satisfies $1 \le s(m_k) \le n(k)$, that is, $s(m_k) \in \{x \in N: 1 \le x \le n(k)\}$. For any $k \in \{x \in N: 1 \le x \le K\}$ and any $m_k \in \{x \in N: 1 \le x \le M(k)\}$, Formula (3) holds. In Formula (3), a symbol "mod" represents remainder calculation, $m_k$ mod n(k) is a remainder obtained by Euclidean division of a dividend $m_k$ by a divisor n(k).
[Formula 10]

$$s(m_k) = \begin{cases} m_k \bmod n(k) & (m_k \bmod n(k) \neq 0) \\ n(k) & (m_k \bmod n(k) = 0) \end{cases} \tag{3}$$

As is clear from the description above, the number E pairs 5 of electrodes included in the interface sensor 2 is given by Formula (4), and the number L of the conducting lines 7 to be drawn from the interface sensor 2 is given by Formula (5). Under the above-described conditions, L < M(1) + 1 can be achieved.

## [Formula 11]

$$E = \sum_{k=1}^{K} M(k) = \sum_{k=1}^{K} \prod_{j=k}^{K} n(j) \tag{4}$$

$$L = \sum_{k=1}^{K} (n(k) + 1) \tag{5}$$

One example of a method for locating the position of the interface using the interface sensor 2 will be described next. In the k-th ($k \in \{x \in N: 1 \le x \le K\}$) sensor block 3, a detection circuit (not illustrated) compares a difference $D(t_k)$ with a predetermined threshold value $\delta$. The difference $D(t_k)$ is a difference between combination of physical quantities (for example, total capacitance) produced in respective pairs of electrodes connected to the $t_k$-th conducting line 7 and combination of physical quantities (for example, total capacitance) produced in respective pairs of electrodes connected to the ($t_k$+1)-th conducting line 7. $t_k$ is a parameter for representing an integer that satisfies $1 \le t_k \le n(k)-1$, that is, $t_k \in \{x \in N: 1 \le x \le n(k)-1\}$. As a result of the comparison, for example, in a case where $D(T_k) > \delta$ for certain $T_k \in \{x \in N: 1 \le x \le n(k)-1\}$, candidates for the position of the interface are provided as b(k)+1 sections each determined by a pair of two planes expressed by Formula (6). Here, when k = K, y = 0 is defined. One "section" is a region between two planes expressed by Formula (6). In a case where $D(t_k) \le \delta$ for all $t_k$, the interface does not reach the plane P(1) or the interface exceeds the plane P(M(1)). Note that the detection circuit may be a component of the interface sensor 2 or a physical entity independent of the interface sensor 2. In the latter case, the detection circuit may be a component of the level gauge including the interface sensor 2. The detection circuit, without limitation, may be the detection circuit in the prior art, or may be a detection circuit including an AC signal generator that generates an AC signal to be applied to the {n(k)+1}-th conducting line 7 for any $k \in \{x \in N: 1 \le x \le K\}$, and a comparator that compares a difference $D(t_k)$ with the threshold $\delta$ for any $t_k \in \{x \in N: 1 \le x \le n(k)-1\}$, or may be the detection circuit illustrated in FIGS. 2 and 5 (including the input circuit 30 and the discrimination means 70), or may be the detection circuit illustrated in FIG. 6 (including the input circuit 30, the discrimination means 70, and the addition means 12 and 122), or may be the detection circuit illustrated in FIG. 7 (including the input circuit 80, the discrimination means 70 and the A/D conversion part 130), or may be a detection circuit including a programmable logic device (PLD).

Examples of the PLD include a field-programmable gate array (FPGA).
[Formula 12]

$$P\Big((T_k + y \times n(k)) \times \prod_{j=1}^{k} n(j-1)\Big), \quad P\Big((T_k + 1 + y \times n(k)) \times \prod_{j=1}^{k} n(j-1)\Big) \quad (6)$$

$$y \in \{x \in N : 0 \le x \le b(k)\}, \qquad b(k) = \left(\prod_{j=k+1}^{K} n(j)\right) - 1$$

As one example, the position of the interface can be located using an algorithm shown in Table 1. In other words, except a case where the interface does not reach the plane P(1) and a case where the interface exceeds the plane P(M(1)), a common section among the respective sensor blocks 3 is identified as a section in which the interface exists. In the algorithm shown in Table 1, it is assumed that $T_K \in \{x \in N: 1 \le x \le n(K)\text{-}1\}$ which satisfies $D(T_K) > \delta$ exists in the K-th sensor block 3. For example, in the algorithm shown in Table 1 we can rewrite K to K' of an integer which satisfies $1 < K' < K$ in a case where for the K', $T_{K'+1} \in \{x \in N: 1 \le x \le n(K'+1)\text{-}1\}$ that satisfies $D(T_{K'+1}) > \delta$ does not exist in the (K'+1)-th sensor block 3 while $T_{K'} \in \{x \in N: 1 \le x \le n(K')\text{-}1\}$ that satisfies $D(T_{K'}) > \delta$ exists in the K'-th sensor block 3. In a case where K' = 1, the interface exists in a section corresponding to y = 0 among b(1)+1 sections each determined by a pair of two planes expressed by Formula (6).

## [Table 1]

$$upper = (T_K + 1) \times \prod_{j=1}^{K} n(j-1)$$

$$lower = T_K \times \prod_{j=1}^{K} n(j-1)$$

$$\textbf{for } k = K - 1 \textbf{ to } 1 \textbf{ (step} : -1)$$

$$b(k) = \left(\prod_{j=k+1}^{K} n(j)\right) - 1, \qquad r(k) = \prod_{j=1}^{k} n(j-1)$$

$$\textbf{for } y = 0 \textbf{ to } b(k) \textbf{ (step} : +1)$$

$$\textbf{if } ((T_k + y \times n(k)) \times r(k) > lower \textbf{ and}$$

$$(T_k + 1 + y \times n(k)) \times r(k) < upper) \textbf{ then}$$

$$upper = (T_k + 1 + y \times n(k)) \times r(k)$$

$$lower = (T_k + y \times n(k)) \times r(k)$$

$$\textbf{goto G} :$$

$$\textbf{end if}$$

$$\textbf{next } y$$

$$\textbf{G} :$$

$$\textbf{next } k$$

$$\textbf{output} : \ P(lower), \ P(upper)$$

The interface sensor 2 may include a pair of electrodes for determining that the interface does not reach the plane P(1) and/or a pair of electrodes for determining that the interface exceeds the plane P(M(1)). It can be known that the interface does not reach the plane P(1) in a case where $D(t_k) \le \delta$ for all $t_k$ in the first sensor block 3, and thus, the former pair of electrodes is not essential.

A specific configuration example of the interface sensor 2 is illustrated in FIG. 9. The configuration example illustrated in FIG. 9 is an example in a case where M(1) = 30, and K = 3. In the example illustrated in FIG. 9, M(1) = $2 \times 5 \times 3$

is employed as factorization based on three factors of M(1). In other words, n(1) = 3, n(2) = 5, and n(3) = 2. Thus, from Formula (1), M(1) = 30, M(2) = 10, and M(3) = 2.

The $m_1$-th ($m_1 \in \{x \in N: 1 \leq x \leq 30\}$) pair 5 of electrodes among 30 pairs 5 of electrodes included in the first sensor block 3 is placed in the r(1, $m_1$)-th plane P(r(1, $m_1$) among 30 planes. Here, from Formula (2), r(1, $m_1$) = $m_1$. In short, the p-th (p $\in \{x \in N: 1 \leq x \leq 30\}$) pair 5 of electrodes included in the first sensor block 3 is placed in the p-th plane P(p).

The $m_2$-th ($m_2 \in \{x \in N: 1 \leq x \leq 10\}$) pair 5 of electrodes among 10 pairs 5 of electrodes included in the second sensor block 3 is placed in the r(2, $m_2$)-th plane P(r(2, $m_2$)) among 30 planes. Here, from Formula (2), r(2, $m_2$) = 3 × $m_2$. In short, the p-th (p $\in \{x \in N: 1 \leq x \leq 10\}$) pair 5 of electrodes included in the second sensor block 3 is placed in the (3×p)-th plane P(3×p). For example, the seventh (p = 7 $\in \{x \in N: 1 \leq x \leq 10\}$) pair 5 of electrodes included in the second sensor block 3 is placed in the 21st plane P(21).

The $m_3$-th ($m_3 \in \{x \in N: 1 \leq x \leq 2\}$) pair 5 of electrodes among two pairs 5 of electrodes included in the third sensor block 3 is placed in the r(3, $m_3$)-th plane P(r(3, $m_3$)) among 30 planes. Here, from Formula (2), r(3, $m_3$) = 15 × $m_3$. In short, the p-th (p $\in \{x \in N: 1 \leq x \leq 2\}$) pair 5 of electrodes included in the third sensor block 3 is placed in the (15×p)-th plane P(15×p). For example, the first (p = 1 $\in \{x \in N: 1 \leq x \leq 2\}$) pair 5 of electrodes included in the third sensor block 3 is placed in the 15th plane P(15).

One electrode 5a of the $m_1$-th ($m_1 \in \{x \in N: 1 \leq x \leq 30\}$) pair 5 of electrodes among 30 pairs 5 of electrodes included in the first sensor block 3 is connected to the s($m_1$)-th conducting line 7 among four conducting lines 7 and the other electrode 5b is connected to the fourth conducting line 7 among the four conducting lines 7. From Formula (3), for example, one electrode 5a of the seventh pair 5 of electrodes is connected to the first conducting line 7 (7 mod 3 = 1), one electrode 5a of the 17th pair 5 of electrodes is connected to the second conducting line 7 (17 mod 3 = 2), and one electrode 5a of the 24th pair 5 of electrodes is connected to the third conducting line 7 (24 mod 3 = 0).

One electrode 5a of the $m_2$-th ($m_2 \in \{x \in N: 1 \leq x \leq 10\}$) pair 5 of electrodes among 10 pairs 5 of electrodes included in the second sensor block 3 is connected to the s($m_2$)-th conducting line 7 among 6 conducting lines 7 and the other electrode 5b is connected to the sixth conducting line 7 among the 6 conducting lines 7. From Formula (3), one electrodes 5a of the first and the sixth pairs 5 of electrodes are connected to the first conducting line 7 (1 mod 5 = 6 mod 5 = 1), one electrodes 5a of the second and the seventh pairs 5 of electrodes are connected to the second conducting line 7 (2 mod 5 = 7 mod 5 = 2), and one electrodes 5a of the third and the eighth pairs 5 of electrodes are connected to the third conducting line 7 (3 mod 5 = 8 mod 5 = 3), one electrodes 5a of the fourth and the ninth pairs 5 of electrodes are connected to the fourth conducting line 7 (4 mod 5 = 9 mod 5 = 4), and one electrodes 5a of the fifth and the tenth pairs 5 of electrodes are connected to the fifth conducting line 7 (5 mod 5 = 10 mod 5 = 0).

One electrode 5a of the $m_3$-th ($m_3 \in \{x \in N: 1 \leq x \leq 2\}$) pair 5 of electrodes among 2 pairs 5 of electrodes included in the third sensor block 3 is connected to the s($m_3$)-th conducting line 7 among 3 conducting lines 7 and the other electrode 5b is connected to the third conducting line 7 among the 3 conducting lines 7. From Formula (3), one electrode 5a of the first pair 5 of electrodes is connected to the first conducting line 7 (1 mod 2 = 1), and one electrode 5a of the second pair 5 of electrodes is connected to the second conducting line 7 (2 mod 2 = 0).

The number E of the pairs 5 of electrodes included in the configuration example of the interface sensor 2 illustrated in FIG. 9 is 42 from Formula (4), and the number L of the conducting lines 7 is 13 from Formula (5). The total number M(1) of the observation points is 30, and thus, L < M(1) + 1 holds. Note that according to the water gauge in the prior art illustrated in FIG. 1, the number of conducting lines is 31 (= M(1) + 1). Further, for example, while not illustrated, in a case where M(1) = 1440, K = 5, n(1) = 5, n(2) = 3, n(3) = 2, n(4) = 8, and n(5) = 6, the number L of the conducting lines 7 in the interface sensor 2 is 29, whereas according to the water gauge in the prior art illustrated in FIG. 1, the number of conducting lines is 1441 (= M(1) + 1).

In the example illustrated in FIG. 9, the number F of the substrates 9 is 1. However, F may be 2 or 3. In a case where F = 2, for example, the first sensor block 3 and the second sensor block 3 are formed on the first substrate, and the third sensor block 3 is formed on the second substrate.

The interface sensor 200 herein disclosed will be described next. Whereas the interface sensor 2 includes K sensor blocks 3, the interface sensor 200 includes one sensor block 300 and has a configuration equivalent to the configuration of the interface sensor 2.

The interface sensor 200 is a sensor for locating the position of the interface between two types of substances (that is, the first substance and the second substance different from each other). However, to accurately locate the position, the number of interfaces has to be 1 or 0 in a range from the plane P(1) to the plane P(E) as described later. As will be shown in Formula (7) later, the interface sensor 200 includes E pairs 500 of electrodes. The position of the interface between the first substance and the second substance is located by using physical quantities produced in each of the E pairs 500 of electrodes, corresponding to a property of the first substance or second substance present between electrodes of each of the E pairs 500 of electrodes. The "interface" and the "homogeneous phase" are as described above. A typical example of the interface sensor 200 is a sensor for locating the position of the interface between a liquid (for example, water) as the first substance and a gas (for example, air) as the second substance.

A configuration of the interface sensor 200 will be described. Symbols appearing in the following description are unrelated to symbols used in the description in the embodiments described above or the description of the interface sensor 2. Further, RC=$\varepsilon\rho$ holds, where C is capacitance between two conductors with equal positive and negative charges, R is electrical resistance between the two conductors, $\varepsilon$ is dielectric constant of a medium between the two conductors, and $\rho$ is electrical resistivity of the medium between the two conductors. Thus, only capacitance of the pair of electrodes 500 will be described below, and description of electric resistivity of the pair of electrodes 500 will be omitted.

The interface sensor 200 includes E pairs 500 of electrodes, L conducting lines 700 to be drawn from the sensor block 300, and a conducting line selector 800. Customarily, the E pairs 500 of electrodes and the L conducting lines 700 are formed on a substrate 900 having a plate shape. Waterproof coating is applied to the substrate 900 except the E pairs 500 of electrodes. The conducting line selector 800 may be formed on the substrate 900 or may be formed on other substrates, although not limited thereto. In a case where the first substance is a liquid, the conducting line selector 800 is preferably located at a position not soaking in the liquid, and in a case where the conducting line selector 800 is located at a position soaked in the liquid, waterproof coating is applied.

The E pairs 500 of electrodes have the same capacitance $C_1$ as each other in a state where interelectrode gap of each of the E pairs 500 of electrodes is filled with, for example, the first substance. The E pairs 500 of electrodes are connected to the L conducting lines 700 as described later. The L-1 conducting lines 700 except the L-th conducting line 700 are connected to the conducting line selector 800 described later. In FIGS. 10 and 11, in view of clarity of the figures, reference signs are assigned to only one pair of electrodes and some conducting lines. E is expressed by Formula (7). L is expressed by Formula (8). K is a predetermined integer which satisfies $2 \leq K$. j is a parameter for representing an integer that satisfies $1 \leq j \leq K$, that is, $j \in \{x \in N: 1 \leq x \leq K\}$. For any $j \in \{x \in N: 1 \leq x \leq K\}$, n(j) is a predetermined integer which satisfies $2 \leq n(j)$. N is a set of all positive integers. E, that is, the number of the pairs 500 of electrodes included in the sensor block 300 determines resolution of the interface sensor 200. In other words, E matches the total number of the "observation points" described above (this total number is represented by a symbol Z in description of the prior art). Under the above-described conditions, L < E + 1 can be achieved.

[Formula 13]

$$E = \prod_{j=1}^{K} n(j) \tag{7}$$

$$L = \sum_{j=1}^{K} \left( n(j) - 1 \right) + 2 \tag{8}$$

n(j) is a positive divisor of E (except 1 and E). Notation of E is not unique. In a case where E has two or more types of notation (that is, two or more ways of factorization), a person who implements the interface sensor 200 can freely select one type of notation in view of easiness of implementation of the interface sensor 200, manufacturing cost of the interface sensor 200, an environment in which the interface sensor 200 is used, and the like. In other words, two or more types of notation of E mean a degree of freedom in the designing of the interface sensor 200. In terms of reduction in the total number L of the conducting lines 700, n(j) is preferably a prime factor of E, that is, a right side of Formula (7) is preferably factorization into prime factors (see Formula (8)).

The E pairs 500 of electrodes are placed in E planes, which do not coincide with each other and which are parallel to each other, in order according to an order relation of elements of a set $\{x \in N: 1 \leq x \leq E\}$. The E planes P(1), ..., P(E) are arranged in space in order according to an order relation of elements (that is, an order relation of natural numbers) of the set $\{x \in N: 1 \leq x \leq E\}$. Specifically, the $p_b$-th ($p_b \in \{x \in N: 2 \leq x \leq p_a-1\}$) plane P($p_b$) exists between the first plane P(1) and the $p_a$-th ($p_a \in \{x \in N: 3 \leq x \leq E\}$) plane P($p_a$). Further, in a simple term, in a case where a normal direction of the E planes P(1), ..., P(E) parallel to each other is referred to as a first direction, the E planes P(1), ..., P(E) are arranged in this order in the first direction. For any $g \in \{x \in N: 1 \leq x \leq E-2\}$ and $h \in \{x \in N: g+1 \leq x \leq E-1\}$, a distance between the g-th plane P(g) and the (g+1)-th plane P(g+1) may be equal to or not equal to a distance between the h-th plane P(h) and the (h+1)-th plane P(h+1). For example, it is preferable to make narrower an interval between adjacent planes in a measurement range in which the position of the interface is desired to be more accurately located. The p-th pair 500 of electrodes among the E pairs 500 of electrodes is placed in the p-th plane P(p) among the E planes. p is a parameter for representing an integer which satisfies $1 \leq p \leq E$, that is, $p \in \{x \in N: 1 \leq x \leq E\}$. While the E pairs 500 of electrodes are customarily arranged linearly, the arrangement is not limited to this, and the E pairs 500 of electrodes may be, for example, arranged in a walking footprint shape. Note that in a case where the first direction is a vertical direction, "plane" may be rephrased as, for example, "level".

For any $p \in \{x \in N: 1 \leq x \leq E- 1\}$, one electrode 500a of the p-th pair 500 of electrodes among the E pairs 500 of electrodes is connected to the s(p)-th conducting line 700 among the L conducting lines 700 and the other electrode 500b is connected to the L-th conducting line 700 among the L conducting lines 700. One electrode 500a of the p-th (p ∈ {x ∈ N: 1 ≤ x ≤ E-1}) pair 500 of electrodes and the s(p)-th conducting line 700 are connected to each other by way of a support line 700x in this example. The other electrode 500b of the p-th (p ∈ {x ∈ N: 1 ≤ x ≤ E-1 }) pair 500 of electrodes and the L-th conducting line 7 are connected to each other by way of a support line 700y in this example. s(p) is expressed by Formula (9). In Formula (9), a symbol "mod" represents remainder calculation, and a mod b is a remainder obtained by Euclidean division of a dividend a by a divisor b. In Formula (9), a symbol "/" appearing in the dividend in the remainder calculation represents division. In the description, n(0) = 1.
[Formula 14]

$$s(p) = \left( p \left/ \prod_{j=1}^{r} n(j-1) \right) \mod n(r) + \sum_{j=1}^{r} \left( n(j-1) - 1 \right) \right. \tag{9}$$

In Formula (9), r is specified by p ∈ W(r), in other words, r is specified by a set W(r) to which p belongs. For any k ∈ {x ∈ N: 1 ≤ x ≤ K}, the k-th set W(k) is expressed by Formula (10). The (K+1)-th set W(K+1) is an empty set Φ. In Formula (10), a symbol "|" represents a multiple, that is, a|b represents that "b is a multiple of a".
[Formula 15]

$$W(k) = \left\{ x \in N : 1 \leq x \leq E \ \wedge \ \left( \prod_{j=1}^{k} n(j-1) \right) \middle| x \right\} - \bigcup_{j=k}^{K} W(j+1) \tag{10}$$

When W = {W(j): j ∈ N ∧ 1 ≤ j ≤ K} is defined, as is clear from Formula (10), the following holds.

(1) ∀ W(j) ∈ W, W(j) ≠ Φ
(2) W(i) ∈ W, W(j) ∈ W, W(i) ≠ W(j) ⇒ W(i) ∩ W(j) = Φ
(3) ∪_{j=1}^{K} W(j) = {x ∈ N: 1 ≤ x ≤ E}

Thus, ∀p ∈ {x ∈ N: 1 ≤ x ≤ E-1}, ∃!W(r) ∈ W s.t. p ∈ W(r). In other words, the set W(r) to which p belongs is uniquely determined.
One electrode 500a of the E-th pair 500 of electrodes among the E pairs 500 of electrodes is connected to the (L-1)-th conducting line 700 among the L conducting lines 700 and the other electrode 500b is connected to the L-th conducting line 700 among the L conducting lines 700.
The conducting line selector 800 can select any one conducting line 700 among the L conducting lines 700 except the L-th conducting line 700.
Alternatively, for any k ∈ {x ∈ N: 1 ≤ x ≤ K}, the conducting line selector 800 selects:

(1) in a case where k ≠ K and n(k) ≠ 2,

for any y ∈ {x ∈ N: 1 ≤ x ≤ n(k)-2}, two conducting lines 700 determined by elements belonging to a set Y(y), among the L conducting lines 700, at the same time, and
for y = n(k)-1, (2+Σ_{j=k+1}^{K}(n(j)-1)) conducting lines 700 determined by elements belonging to a set Y_a(y), among the L conducting lines 700, at the same time,

(2) in a case where k ≠ K and n(k) = 2,
for y = n(k)-1, (2+Σ_{j=k+1}^{K}(n(j)-1)) conducting lines 700 determined by elements belonging to the set Y_a(y), among the L conducting lines 700, at the same time, and
(3) in a case where k = K,
for any y ∈ {x ∈ N: 1 ≤ x ≤ n(k)-1}, two conducting lines 700 determined by elements belonging to a set Y(y), among the L conducting lines 700, at the same time.

The set Y(y) is expressed by Formula (11), and the set Y_a(y) is expressed by Formula (12). These sets are expressed as sum sets of singletons.

[Formula 16]

$$Y(y) = \bigcup_{z=y}^{y+1}\left\{\sum_{j=1}^{k}\Big(n(j-1)-1\Big)+z\right\} \qquad (11)$$

$$Y_a(y) = \left\{\sum_{j=1}^{k}\Big(n(j-1)-1\Big)+y\right\}\bigcup \bigcup_{m=k+1}^{K}\bigcup_{z=1}^{n(m)-1}\left\{\sum_{j=1}^{m}\Big(n(j-1)-1\Big)+z\right\}\bigcup\Big\{L-1\Big\} \qquad (12)$$

In a case where the interface sensor 200 includes the conducting line selector 800 configured to select two or more conducting lines 700 at the same time in this manner, the conducting line selector 800 preferably connects the two or more conducting lines 700 selected at the same time to two conducting lines (a conducting line a and a conducting line b) as follows.

(A) Regarding Formula (11), the conducting line 700 determined by the elements belonging to the set expressed by Formula (13) is connected to the conducting line a, and the conducting line 700 determined by the elements belonging to the set expressed by Formula (14) is connected to the conducting line b.

(B) Regarding Formula (12), the conducting line 700 determined by the elements belonging to the set expressed by Formula (13) is connected to the conducting line a, and the conducting line 700 determined by the elements belonging to the set expressed by Formula (15) is connected to the conducting line b.

[Formula 17]

$$\left\{\sum_{j=1}^{k}\Big(n(j-1)-1\Big)+y\right\} \qquad (13)$$

$$\left\{\sum_{j=1}^{k}\Big(n(j-1)-1\Big)+y+1\right\} \qquad (14)$$

$$\bigcup_{m=k+1}^{K}\bigcup_{z=1}^{n(m)-1}\left\{\sum_{j=1}^{m}\Big(n(j-1)-1\Big)+z\right\}\bigcup\Big\{L-1\Big\} \qquad (15)$$

The interface sensor 200 is equivalent to the interface sensor 2, and thus, a method for locating the position of the interface using the interface sensor 200 is the same as a method for locating the position of the interface using the interface sensor 2. In a case where the interface sensor 200 includes the conducting line selector 800 configured to select two or more conducting lines 700 at the same time, in the interface sensor 200, a detection circuit (not illustrated) compares a difference D with a predetermined threshold value $\delta$. The difference D is a difference between combination of physical quantities (for example, total capacitance) produced in respective pairs of electrodes connected to the conducting line a through the conducting line 700 selected by the conducting line selector 800 and combination of physical quantities (for example, total capacitance) produced in respective pairs of electrodes connected to the conducting line b through the conducting line 700 selected by the conducting line selector 800. Note that the detection circuit may be a component of the interface sensor 200 or may be a physical entity independent of the interface sensor 200. In the latter case, the detection circuit may be a component of a level gauge including the interface sensor 200. The detection circuit, without limitation, may be the detection circuit in the prior art, or may be a detection circuit including an AC signal generator that generates an AC signal to be applied to the L-th conducting line 700 and a comparator, or may be the detection circuit illustrated in FIGS. 2 and 5 (including the input circuit 30 and the discrimination means 70), or may be the detection circuit illustrated in FIG. 6 (including the input circuit 30, the discrimination means 70 and the addition means 12 and 122), or may be the detection circuit illustrated in FIG. 7 (including the input circuit 80, the discrimination means 70 and the A/D conversion part 130) or may be a detection circuit including a programmable logic device (PLD). Examples of the PLD include a field-programmable gate array (FPGA).

As one example, the position of the interface can be located using an algorithm shown in Table 2. In this algorithm, C(13) represents combination of physical quantities (for example, total capacitance) produced in respective pairs of electrodes connected to the conducting line 700 determined by the elements belonging to the set expressed by Formula (13), C(14) represents combination of physical quantities (for example, total capacitance) produced in respective pairs of electrodes connected to the conducting line 700 determined by the elements belonging to the set expressed by Formula (14), and C(15) represents combination of physical quantities (for example, total capacitance) produced in respective pairs of electrodes connected to the conducting line 700 determined by the elements belonging to the set expressed by Formula (15). Outputs P(0) and P(1) indicate that the interface does not reach the plane P(1). Note that in this algorithm, overflow determination processing and error avoidance processing are not performed.

[Table 2]

$$U = E, \; L = 0$$

$$\mathbf{for} \; k = K \; \mathbf{to} \; 1 \; (\mathbf{step} : \; -1)$$

$$r(k) = \prod_{j=1}^{k} n(j-1)$$

$$\mathbf{if} \; k = K \; \mathbf{then} \; b(k) = 0 \; \mathbf{else} \; b(k) = \left( \prod_{j=k+1}^{K} n(j) \right) - 1$$

$$\mathbf{for} \; y = 1 \; \mathbf{to} \; n(k) - 1 \; (\mathbf{step} : \; +1)$$

$$\mathbf{if} \; (k = K) \; \mathbf{or} \; (k \neq K \; \mathbf{and} \; y < n(k) - 1) \; \mathbf{then} \; s = |c(14) - c(13)|$$

$$\mathbf{if} \; k \neq K \; \mathbf{and} \; y = n(k) - 1 \; \mathbf{then} \; s = |c(15) - c(13)|$$

$$\mathbf{if} \; s \geq \delta \; \mathbf{then}$$

$$\mathbf{for} \; t = 0 \; \mathbf{to} \; b(k) \; (\mathbf{step} : \; +1)$$

$$\mathbf{if} \; (y + t \times n(k)) \times r(k) \geq L \; \mathbf{and} \; (y + 1 + t \times n(k)) \times r(k) \leq U \; \mathbf{then}$$

$$\mathbf{if} \; (y + t \times n(k)) \times r(k) > L \; \mathbf{then} \; L = (y + t \times n(k)) \times r(k)$$

$$\mathbf{if} \; (y + 1 + t \times n(k)) \times r(k) < U \; \mathbf{then} \; U = (y + 1 + t \times n(k)) \times r(k)$$

$$\mathbf{goto} \; \mathbf{G}$$

$$\mathbf{end \; if}$$

$$\mathbf{next} \; t$$

$$\mathbf{end \; if}$$

$$\mathbf{next} \; y$$

$$U = L + \prod_{j=1}^{k} n(j-1)$$

$$\mathbf{G:}$$

$$\mathbf{next} \; k$$

$$\mathbf{output} : \; P(L), \; P(U)$$

In a case where the total number Z of the "observation points" described above is a prime equal to or greater than 5, Z-1 is the number of syntheses. Thus, by setting the value of E as Z-1, the interface sensor can be configured to have Z (where Z is a prime equal to or greater than 5) observation points. Specifically, the interface sensor has a configuration in which one pair of electrodes and one conducting line are added to the interface sensor 200 including E (where E = Z - 1) pairs 500 of electrodes, L conducting lines 700 and the conducting line selector 800. In this configuration, the added one pair of electrodes is placed in the P(E+1)-th plane, one electrode of the added one pair of electrodes is connected to the added one conducting line, and the other electrode is connected to the L-th conducting line 700. When the detection circuit determines whether an capacitance value of the added one pair of electrodes exceeds a predetermined reference value, whether the interface exceeds the P(E+1)-th plane can be determined.

A first example and a second example that are specific configuration examples of the interface sensor 200 are illustrated in FIGS. 10 and 11 respectively. These configuration examples are examples where E = 30, and K = 3. In each of the examples illustrated in FIGS. 10 and 11, E = 2 × 5 × 3 is employed as factorization based on three factors of E. In other words, n(1) = 3, n(2) = 5, and n(3) = 2. In this case, L = 9. See Formula (7) and Formula (8) for these facts.

As illustrated in FIG. 10 and FIG. 11, the p-th ($p \in \{x \in N: 1 \le x \le 30\}$) pair 500 of electrodes is placed in the p-th plane P(p).

From Formula (10), W(3), W(2) and W(1) are determined as follows:

$$W(3) = \{15, 30\}$$

$$W(2) = \{3, 6, 9, 12, 18, 21, 24, 27\}$$

$$W(1) = \{1, 2, 4, 5, 7, 8, 10, 11, 13, 14, 16, 17, 19, 20, 22, 23, 25, 26, 28, 29\}$$

For example, in a case where p = 12, we obtain $p \in W(2)$, that is, r = 2. Thus, from Formula (9), s(p) = 6, and one electrode 500a of the 12th (= p) pair 500 of electrodes is connected to the sixth (= s(p)) conducting line 700, and the other electrode 500b of the 12th (= p) pair 500 of electrodes is connected to the ninth (= L) conducting line 700. All calculation results are as follows:

$$p \in \{1, 4, 7, 10, 13, 16, 19, 22, 25, 28\} \to s(p) = 1,$$

$$p \in \{2, 5, 8, 11, 14, 17, 20, 23, 26, 29\} \to s(p) = 2,$$

$$p \in \{3, 18\} \to s(p) = 3,$$

$$p \in \{6, 21\} \to s(p) = 4,$$

$$p \in \{9, 24\} \to s(p) = 5,$$

$$p \in \{12, 27\} \to s(p) = 6,$$

and

$$p \in \{15\} \to s(p) = 7.$$

One electrode 500a of the 30th (= E) pair 500 of electrodes is connected to the eighth (= L-1) conducting line 700, and the other electrode 500b of the 30th (= E) pair 500 of electrodes is connected to the ninth (= L) conducting line 700.

The interface sensor 200 illustrated in FIG. 10 includes the conducting line selector 800 configured to select any one conducting line 700 among the L conducting lines 700 except the L-th conducting line 700. Such a conducting line selector 800 includes L-1 single-pole-single-throw switches, although not limited thereto. One end of each of the L-1 single-pole-single-throw switches is connected to the corresponding conducting line 700 among the L-1 conducting lines 700 except the L-th conducting line 700. The other end of each of the L-1 single-pole-single-throw switches is connected to a C/V converter, although not limited thereto. A configuration of such a conducting line selector 800 can be implemented along with the configuration of the detection circuit illustrated in FIG. 7 (including at least the A/D conversion part 130, the control means 90 and the discrimination means 70). In a case where a value of L is not great, the conducting line selector 800 may be a single-pole-(L-1)-throw switch. In a case where the conducting line selector 800 is a single-pole-(L-1)-throw switch, the number of the C/V converter to be connected to the conducting line selector 800 may be one.

The interface sensor 200 illustrated in FIG. 11 includes the conducting line selector 800 configured to select two or more conducting lines 700 at the same time. Such a conducting line selector 800 includes L-1 single-pole-triple-throw switches, although not limited thereto. An input terminal of each of the single-pole-triple-throw switches is connected to the corresponding conducting line 700 among the L-1 conducting lines 700 except the L-th conducting line 700. A first output terminal of the single-pole-triple-throw switch is connected to the conducting line b, a second output terminal is terminated, and third output terminal is connected to the conducting line a. The conducting line a and the conducting line b are connected to the comparator, although not limited thereto. In this configuration example, the conducting line selector 800 connects two or more conducting lines 700 selected at the same time to the conducting line a and the conducting line b as follows.

The conducting line selector 800 performs the following selection operation in the configuration illustrated in FIG. 11.

In a case where k = 1,
from n(k) = 3, and Formula (11) and Formula (12),

$$Y(1) = \{1\} \cup \{2\},$$

and

$$Y_a = \{2\} \cup \{3, 4, 5, 6, 7, 8\}$$

are obtained.

Thus, in a case where y = 1, the conducting line selector 800 selects the third output terminal of the single-pole-triple-throw switch connected to the first conducting line 700, selects the first output terminal of the single-pole-triple-throw switch connected to the second conducting line 700, and selects the second output terminal of each of the single-pole-triple-throw switches connected to the third to the eighth conducting lines 700, thereby selects the first conducting line 700 and the second conducting line 700 at the same time. In a case where y = 2, the conducting line selector 800 selects the second output terminal of the single-pole-triple-throw switch connected to the first conducting line 700, selects the third output terminal of the single-pole-triple-throw switch connected to the second conducting line 700, and selects the first output terminal of each of the single-pole-triple-throw switches connected to the third to the eighth conducting lines 700, thereby selects the second to the eighth conducting lines 700 at the same time.

In a case where k = 2,
from n(k) = 5, and Formula (11) and Formula (12),

$$Y(1) = \{3\} \cup \{4\},$$

$$Y(2) = \{4\} \cup \{5\},$$

$$Y(3) = \{5\} \cup \{6\},$$

and

$$Y_a = \{6\} \cup \{7, 8\}$$

are obtained.

Thus, in a case where y = 1, the conducting line selector 800 selects the third output terminal of the single-pole-triple-throw switch connected to the third conducting line 700, selects the first output terminal of the single-pole-triple-throw switch connected to the fourth conducting line 700, and selects the second output terminal of each of the single-pole-triple-throw switches connected to the first, the second and the fifth to the eighth conducting lines 700, thereby selects the third conducting line 700 and the fourth conducting line 700 at the same time.

In a case where y = 2, the conducting line selector 800 selects the third output terminal of the single-pole-triple-throw switch connected to the fourth conducting line 700, selects the first output terminal of the single-pole-triple-throw switch connected to the fifth conducting line 700, and selects the second output terminal of each of the single-pole-triple-throw switches connected to the first to the third, and the sixth to the eighth conducting lines 700, thereby selects the fourth conducting line 700 and the fifth conducting line 700 at the same time.

In a case where y = 3, the conducting line selector 800 selects the third output terminal of the single-pole-triple-throw switch connected to the fifth conducting line 700, selects the first output terminal of the single-pole-triple-throw switch connected to the sixth conducting line 700, and selects the second output terminal of each of the single-pole-triple-throw switches connected to the first to the fourth, the seventh and the eighth conducting lines 700, thereby selects the fifth conducting line 700 and the sixth conducting line 700 at the same time.

In a case where y = 4, the conducting line selector 800 selects the second output terminal of the single-pole-triple-throw switch connected to the first to the fifth conducting lines 700, selects the third output terminal of the single-pole-triple-throw switch connected to the sixth conducting line 700, and selects the first output terminal of each of the single-pole-triple-throw switches connected to the seventh and the eighth conducting lines 700, thereby selects the sixth to the eighth conducting lines 700 at the same time.

In a case where k = 3,

from n(k) = 2 and Formula (11),

$$Y(1) = \{7\} \cup \{8\}$$

is obtained.

Thus, in a case where y = 1, the conducting line selector 800 selects the second output terminal of the single-pole-triple-throw switch connected to the first to the sixth conducting lines 700, selects the third output terminal of the single-pole-triple-throw switch connected to the seventh conducting line 700, and selects the first output terminal of each of the single-pole-triple-throw switches connected to the eighth conducting line 700, thereby selects the seventh conducting line 700 and the eighth conducting line 700 at the same time.

A controller that controls operation of the conducting line selector 800 is well known, and thus, illustration and description of the controller are omitted.

The level gauge of the present disclosure includes the interface sensor 200 described above, the first substance is a liquid, and the second substance is a gas. In the level gauge, the first direction is preferably a vertical direction, but is not limited to this.

<Supplement>

The examples illustrated in FIGS. 2 to 8 indicate a level gauge in which E is expressed by a power-of-two, and one pair of electrodes among E pairs of electrodes has predetermined capacitance for improving accuracy.

<Addendum>

The present invention has been described with reference to the example embodiments. Thus, the present invention is not limited to the specific embodiments disclosed for implementing the present invention and includes all embodiments included in the accompanying claims.

Further, terms such as "first" and "second" are used not to indicate order or importance but to distinguish the elements. The terms used in the present specification are used to explain the embodiments and are not intended to limit the present invention in any way. The term "include" and its declensions as used in the present specification and/or the accompanying claims, clarify existence of the mentioned features, steps, operations, elements and/or components, but do not exclude existence or addition of one or more other features, steps, operations, elements, components and/or a group thereof. The term "and/or", when used, includes any one or more combinations of related listed elements. Unless otherwise specified, in the claims and the specification, "connect", "couple", "join", "link" or synonyms thereof and all declensions do not necessarily deny existence of one or more intermediate elements between two which are, for example, "connected", "coupled" or "linked" to each other. In the claims and the specification, unless otherwise specified, the term "any", when used, should be understood as a term representing the same meaning as a universal quantifier ∀. For example, expression of "concerning any X" has the same meaning as "concerning all X" or "concerning each X."

Unless otherwise noted, all the terms (including technical terms and scientific terms) used in the present specification have the same meaning as generally understood by a person skilled in the art in the field to which the present invention belongs. Further, the terms such as terms defined in dictionaries that are commonly used should be interpreted as having the same meaning as in the context of the related art and the present disclosure, and unless otherwise explicitly defined, should not be interpreted ideally or excessively formally.

It will be understood that many techniques and steps are disclosed in the description of the present invention. These respectively have individual advantages and can be used in combination with one or more or, in some cases, all of other disclosed techniques. Thus, to avoid complication, in the present specification, any possible combinations of the individual techniques and steps are not described.

Although embodiments of the present invention have been described above, the present invention is not limited to these embodiments. The selected and described embodiments are provided to explain principles and actual applications of the present invention.

## EP 4 502 557 B1

[DESCRIPTION OF REFERENCE NUMERALS]

1: Tank
2: Interface sensor
3: Sensor block
5: Pair of electrodes
5a: Electrode
5b: Electrode
6: Electrode pair
7: Conducting line
7x: Support line
7y: Support line
9: Substrate
10: Reference line
11 to 17: Determination means
20: Water level output means
30: Input circuit
40: Sensor part
41: Electrode pair
50, 50', 50": Adjustment part
60, 60': Switching means
61: Switch
70: Discrimination means
80: Water level determination means
90: Control means
100: Switching means
101: Switch
111 to 114: C/V conversion part
121, 122: Addition means
130: A/D conversion part
140: Adjustment value storage part
200: Interface sensor
300: Sensor block
500: Pair of electrodes
500a: Electrode
500b: Electrode
700: Conducting line
700x: Support line
700y: Support line
800: Conducting line selector
900: Substrate

## Claims

1. A level gauge comprising an input circuit (30), a sensor part (40), an adjustment part (50, 50', 50"), switching means (60, 60'), discrimination means (70), and liquid level determination means (80), wherein

   the sensor part (40) includes a plurality of electrode pairs (41) arranged in a liquid level detection direction, the plurality of electrode pairs (41) are divided into n groups, the i-th (i=1, 2, ..., n) group is constituted with an electrode pair (41) at the $2^{i-1}(2k-1)$-th (k is a natural number from 1 to $2^{n-i}$) position from a lowermost position in the liquid level detection direction,
   one ends of all the electrode pairs (41) are connected to the input circuit (30), the other ends belonging to the same group are connected to each other in parallel and connected to the switching means (60, 60'),
   the discrimination means (70) discriminates a larger and smaller relationship between a detection value obtained by the i-th group and a detection value obtained by a group that is a combination from the (i+1)-th group to the n-th group for each of i=1, 2, ..., n-1 and further discriminates a larger and smaller relationship between a detection value obtained by the n-th group and a detection value obtained by the adjustment part (50, 50', 50"), the switching means (60, 60') sequentially switches connection between the groups and the discrimination means (70) so as to enable discrimination by the discrimination means (70), and the liquid level determination means (80) determines a liquid level based on the discrimination by the discrimination means (70).

2. The level gauge according to claim 1, wherein the adjustment part (50, 50', 50") functions so that two detection values for which a larger and smaller relationship is to be discriminated by the discrimination means (70) always become values different from each other.

3. The level gauge according to claim 2, wherein a plurality of the adjustment parts (50) are provided, and the adjustment part (50) to be caused to function is switched according to a group to which the discrimination means (70) is connected.

4. The level gauge according to any of claims 1 to 3, wherein the electrode pairs (41) detect a resistance value between electrodes.

5. The level gauge according to any of claims 1 to 3, wherein the electrode pairs (41) detect capacitance between electrodes.

6. The level gauge according to claim 5, wherein

a C/V conversion part (111, 112, 113, 114) that converts capacitance into a voltage and inputs the voltage to the switching means (60, 60') is provided between each group and the switching means (60, 60'), and addition means (121, 122) that enables the discrimination by the discrimination means (70) is provided between the switching means (60, 60') and the discrimination means (70).

7. The level gauge according to any of claims 1 to 3, wherein an A/D conversion part (130) that converts the detection value into a digital value is provided between the switching means (60') and the discrimination means (70).

**Patentansprüche**

1. Füllstandsmessgerät mit einer Eingangsschaltung (30), einem Sensorteil (40), einem Einstellteil (50, 50', 50"), einer Schalteinrichtung (60, 60'), einer Unterscheidungseinrichtung (70) und einer Flüssigkeitsstandsbestimmungseinrichtung (80), wobei

der Sensorteil (40) mehrere Elektrodenpaare (41) aufweist, die in einer Flüssigkeitsstandserfassungsrichtung angeordnet sind, wobei die mehreren Elektrodenpaare (41) in n Gruppen unterteilt sind, wobei die i-te (i=1, 2, ..., n) Gruppe mit einem Elektrodenpaar (41) an der $2^{i-1}(2k-1)$-ten (k ist eine natürliche Zahl von 1 bis $2^{n-i}$) Position von einer untersten Position in der Flüssigkeitsstandserfassungsrichtung gebildet ist, ein Ende aller Elektrodenpaare (41) mit der Eingangsschaltung (30) verbunden ist, die anderen Enden, die zu derselben Gruppe gehören, miteinander parallel verbunden sind und mit der Schalteinrichtung (60, 60') verbunden sind, die Unterscheidungseinrichtung (70) eine Größer-und-kleiner-Beziehung zwischen einem Erfassungswert, der durch die i-te Gruppe erhalten wird, und einem Erfassungswert, der durch eine Gruppe erhalten wird, die eine Kombination von der (i+1)-ten Gruppe zu der n-ten Gruppe ist, für jedes von i=1, 2, ..., n-1 unterscheidet und ferner eine Größer-und-kleiner-Beziehung zwischen einem Erfassungswert, der durch die n-te Gruppe erhalten wird, und einem Erfassungswert, der durch den Einstellteil (50, 50', 50") erhalten wird, unterscheidet, die Schalteinrichtung (60, 60') die Verbindung zwischen den Gruppen und der Unterscheidungseinrichtung (70) sequentiell schaltet, um eine Unterscheidung durch die Unterscheidungseinrichtung (70) zu ermöglichen, und die Flüssigkeitsstandsbestimmungseinrichtung (80) einen Flüssigkeitsstand auf der Grundlage von der Unterscheidung durch die Unterscheidungseinrichtung (70) bestimmt.

2. Füllstandsmessgerät nach Anspruch 1, wobei der Einstellteil (50, 50', 50") so funktioniert, dass zwei Erfassungswerte, für die eine Größer-und-kleiner-Beziehung durch die Unterscheidungseinrichtung (70) zu unterscheiden ist, immer Werte werden, die sich voneinander unterscheiden.

3. Füllstandsmessgerät nach Anspruch 2, wobei mehrere der Einstellteile (50) vorgesehen sind, und der Einstellteil (50), der veranlasst wird zu funktionieren, gemäß einer Gruppe geschaltet wird, mit der die Unterscheidungseinrichtung (70) verbunden ist.

4. Füllstandsmessgerät nach einem der Ansprüche 1 bis 3, wobei die Elektrodenpaare (41) einen Widerstandswert zwischen Elektroden erfassen.

5. Füllstandsmessgerät nach einem der Ansprüche 1 bis 3, wobei die Elektrodenpaare (41) eine Kapazität zwischen Elektroden erfassen.

6. Füllstandsmessgerät nach Anspruch 5, wobei

ein C/V-Umwandlungsteil (111, 112, 113, 114), das eine Kapazität in eine Spannung umwandelt und die Spannung in die Schalteinrichtung (60, 60') eingibt, zwischen jeder Gruppe und der Schalteinrichtung (60, 60') bereitgestellt ist, und
eine Additionseinrichtung (121, 122), welche die Unterscheidung durch die Unterscheidungseinrichtung (70) ermöglicht, zwischen der Schalteinrichtung (60, 60') und der Unterscheidungseinrichtung (70) bereitgestellt ist.

7. Füllstandsmessgerät nach einem der Ansprüche 1 bis 3, wobei ein A/D-Umwandlungsteil (130), welches den Erfassungswert in einen digitalen Wert umwandelt, zwischen der Schalteinrichtung (60') und der Unterscheidungseinrichtung (70) bereitgestellt ist.


**Revendications**

1. Jauge de niveau comprenant un circuit d'entrée (30), une partie de capteur (40), une partie d'ajustement (50, 50', 50"), un moyen de commutation (60, 60'), un moyen de discrimination (70) et un moyen de détermination de niveau de liquide (80), dans laquelle

la partie de capteur (40) comprend une pluralité de paires d'électrodes (41) agencées dans une direction de détection de niveau de liquide, la pluralité de paires d'électrodes (41) sont divisées en n groupes, le i-ème (i = 1, 2, ..., n) groupe est constitué d'une paire d'électrodes (41) à la $2^{i-1}(2k-1)$-ème (k est un nombre naturel de 1 à $2^{n-i}$) position à partir d'une position la plus basse dans la direction de détection de niveau de liquide,
des extrémités de toutes les paires d'électrodes (41) sont connectées au circuit d'entrée (30), les autres extrémités appartenant au même groupe sont connectées les unes aux autres en parallèle et connectées au moyen de commutation (60, 60'),
le moyen de discrimination (70) discrimine une relation plus grande et plus petite entre une valeur de détection obtenue par le i-ème groupe et une valeur de détection obtenue par un groupe qui est une combinaison du (i+1)-ème groupe au n-ème groupe pour chacun de i = 1, 2, ..., n-1 et discrimine en outre une relation plus grande et plus petite entre une valeur de détection obtenue par le n-ème groupe et une valeur de détection obtenue par la partie d'ajustement (50, 50', 50"),
le moyen de commutation (60, 60') commute séquentiellement une connexion entre les groupes et le moyen de discrimination (70) de manière à permettre une discrimination par le moyen de discrimination (70), et
le moyen de détermination de niveau de liquide (80) détermine un niveau de liquide sur la base de la discrimination par le moyen de discrimination (70).

2. Jauge de niveau selon la revendication 1, dans laquelle la partie d'ajustement (50, 50', 50") fonctionne de sorte que deux valeurs de détection pour lesquelles une relation plus grande et plus petite doit être discriminée par le moyen de discrimination (70) deviennent toujours des valeurs différentes l'une de l'autre.

3. Jauge de niveau selon la revendication 2, dans laquelle une pluralité des parties d'ajustement (50) sont prévues, et la partie d'ajustement (50) devant être amenée à fonctionner est commutée selon un groupe auquel le moyen de discrimination (70) est connecté.

**4.** Jauge de niveau selon l'une quelconque des revendications 1 à 3,
dans laquelle les paires d'électrodes (41) détectent une valeur de résistance entre des électrodes.

**5.** Jauge de niveau selon l'une quelconque des revendications 1 à 3,
dans laquelle les paires d'électrodes (41) détectent une capacité entre des électrodes.

**6.** Jauge de niveau selon la revendication 5, dans laquelle

une partie de conversion C/V (111, 112, 113, 114) qui convertit la capacité en une tension et entre la tension dans le moyen de commutation (60, 60') est prévue entre chaque groupe et le moyen de commutation (60, 60'), et un moyen d'addition (121, 122) qui permet la discrimination par le moyen de discrimination (70) est prévu entre le moyen de commutation (60, 60') et le moyen de discrimination (70).

**7.** Jauge de niveau selon l'une quelconque des revendications 1 à 3,
dans laquelle une partie de conversion A/N (130) qui convertit la valeur de détection en une valeur numérique est prévue entre le moyen de commutation (60') et le moyen de discrimination (70).

FIG. 1

FIG. 2

EP 4 502 557 B1

FIG. 3

START

M1
i=1

M2
TURN OFF
ALL SWITCHES

M3
TURN ON SWITCH
THAT CONNECTS
a AND $G_i$

M4
TURN ON SWITCH
THAT CONNECTS b
AND $G_{i+1}$, $G_{i+2}$, ..., $G_n$

M5
a>b?

No

Yes

M6
$2^{i-1}$ BITS: 1

M7
$2^{i-1}$ BITS: 0

M8
i=i+1

M9
i=n?

No

Yes

M10
TURN OFF
ALL SWITCHES

M11
TURN ON SWITCH
THAT CONNECTS
a AND $G_n$

M12
a>b?

No

Yes

M13
$2^{n-1}$ BITS: 1

M14
$2^{n-1}$ BITS: 0

M15
OUTPUT WATER LEVEL

END

28

# FIG. 4

TABLE

| | S1 | S2 | S3 | S4 | S5 | S6 | S7 |
|---|---|---|---|---|---|---|---|
| $i=1$ DETERMINATION OF $2^0$ BITS | ON | OFF | ON | OFF | ON | OFF | ON |
| $i=2$ DETERMINATION OF $2^1$ BITS | OFF | ON | OFF | OFF | ON | OFF | ON |
| $i=3$ DETERMINATION OF $2^2$ BITS | OFF | OFF | OFF | ON | OFF | OFF | ON |
| $i=4$ DETERMINATION OF $2^3$ BITS | OFF | OFF | OFF | OFF | OFF | ON | OFF |

FIG. 5

EP 4 502 557 B1

FIG. 6

FIG. 7

FIG. 8

EP 4 502 557 B1

# FIG. 9

# FIG. 10

# FIG. 11

**EP 4 502 557 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11311562 A
- WO 2016042459 A1